# EUROPEAN PATENT SPECIFICATION

(11) **EP 3 451 553 B1**
(45) Date of publication and mention of the grant of the patent: **03.03.2021**
(21) Application number: 18000717.1
(22) Date of filing: 05.09.2018
(51) Int. Cl.: H04B 7/06, H04B 7/08, H04L 5/00, H04W 72/04

(54) **MECHANISMS FOR MONITORING PHYSICAL DOWNLINK CONTROL CHANNEL WITH COMMON SEARCH SPACE AND USER EQUIPMENT-SPECIFIC SEARCH SPACE IN A BEAMFORMED SYSTEM**
MECHANISMEN ZUR ÜBERWACHUNG DES PHYSIKALISCHEN DOWNLINK-STEUERKANALS MIT GEMEINSAMEM SUCHRAUM UND BENUTZERSPEZIFISCHEM SUCHRAUM IN EINEM STRAHLGEFORMTEN SYSTEM
MÉCANISMES POUR SURVEILLER UN CANAL DE COMMANDE PHYSIQUE DE LIAISON DESCENDANTE COMPORTANT UN ESPACE DE RECHERCHE COMMUN ET UN ESPACE DE RECHERCHE SPÉCIFIQUE D'UN ÉQUIPEMENT UTILISATEUR DANS UN SYSTÈME À FORMATION DE FAISCEAU

(30) Priority: 05.09.2017 US 201762554411 P; 16.04.2018 US 201862658217 P
(43) Date of publication of application: 06.03.2019
(73) Proprietor: Apple Inc., Cupertino, CA 95014 (US); Intel IP Corporation, Santa Clara, CA 95054 (US)
(72) Inventor: Gang, Xiong, Santa Clara, CA 95054 (US); Debdeep, Chatterjee, Santa Clara, CA 95054 (US); Yushu, Zhang, Santa Clara, CA 95054 (US); Hong, He, Sunnyvale, CA 94087 (US); Yongjun, Kwak, Santa Clara, CA 95054 (US); Daewon, Lee, Santa Clara, CA 95054 (US); Alexei, Davydov, Santa Clara, CA 95054 (US); Guotong, Wang, Santa Clara, CA 95054 (US); Bishwarup, Mondal, Santa Clara, CA 95054 (US); Seunghee, Han, Santa Clara, CA 95054 (US)
(74) Representative: Barton, Russell Glen

(56) References cited:
- US-A1- 2013 286 960
- INTEL CORPORATION: "PDCCH transmission schemes and multi-beam operation", 3GPP DRAFT; R1-1707378 INTEL PDCCH MULTI-BEAM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou; 20170515 - 20170519 14 May 2017 (2017-05-14), XP051272590, Retrieved from the Internet: URL:http://www.3gpp.org/ftp/Meetings_3GPP_ SYNC/RAN1/Docs/ [retrieved on 2017-05-14]
- MCC SUPPORT: "Draft Report of 3GPP TSG RAN WG1 #89 v0.1.0", 3GPP DRAFT; DRAFT_MINUTES_REPORT_RAN1#89_V010, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech; 20170821 - 20170825 24 May 2017 (2017-05-24), XP051285670, Retrieved from the Internet: URL:http://www.3gpp.org/ftp/tsg_ran/WG1_RL 1/TSGR1_89/Report/ [retrieved on 2017-05-24]
- SAMSUNG: "CORESET Configurations", 3GPP DRAFT; R1-1710693 CORESET CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20170627 - 20170630 26 June 2017 (2017-06-26), XP051299899, Retrieved from the Internet: URL:http://www.3gpp.org/ftp/Meetings_3GPP_ SYNC/RAN1/Docs/ [retrieved on 2017-06-26]

## Description

### FIELD

The invention generally relates to the field of wireless communications. This document suggests mechanisms for monitoring a physical downlink control channel and related control signaling. In some embodiments, the downlink control channel may be provided with a common search space (CSS) and a user-equipment (UE)-specific search space (USS).

### BACKGROUND

Mobile communication has evolved significantly from early voice systems to today's highly sophisticated integrated communication platform. The next generation wireless communication system, 5G, or new radio (NR) will provide access to information and sharing of data anywhere, anytime by various users and applications. NR is expected to be a unified network/system that target to meet vastly different and sometime conflicting performance dimensions and services. Such diverse multi-dimensional requirements are driven by different services and applications. In general, NR will evolve based on 3GPP LTE-Advanced with additional potential new Radio Access Technologies (RATs) to enrich people lives with better, simple and seamless wireless connectivity solutions. NR will enable everything connected by wireless and deliver fast, rich contents and services.

For NR system, high frequency band communication has attracted significantly attention from the industry, since it can provide wider bandwidth to support the future integrated communication system. The beam forming is an important technology for the implementation of high frequency band system: The beam forming gain can compensate the severe path loss caused by atmospheric attenuation, improve the signal to noise ratio (SNR), and enlarge the coverage area. By aligning the transmission beam to the target UE, radiated energy is focused for higher energy efficiency, and mutual UE interference is suppressed.

3GPP Tdoc. R1-1707378, "PDCCH transmission schemes and multi-beam operation", 3GPP TSG RAN WG1 Meeting #89, May 2017 relates to multi-beam operation for NR PDCCH, with focus on control resource set configuration. The following proposals are described by this document: One CORESET can be associated with one BPL for multi-beam operation, and for both USS and CSS in a common CORESET, the same PDCCH monitoring configuration is applied in case of multi-beam operation.

US 2013/0286960 A1 discloses an apparatus and a method for control channel beam management in a wireless system with a large number of antennas. A base station (BS) is configured to perform a coordinated transmission to at least one user equipment (UE). The BS includes a plurality of antenna configured to communicate with the UE. The BS also includes processing circuitry coupled to the plurality of antennas and configured to transmit physical downlink control channel (PDCCH) to the at least one user equipment. The UE includes a plurality of antennas configured to communicate with the BS. The UE also includes a processing circuitry coupled to the plurality of antennas and configured to receive PDCCH from the BS. The PDCCH is included in one or more transmit (Tx) beams. A Tx beam is defined by the cell specific reference signal (CRS) transmitted through the Tx beam. A Tx beam is configured to carry a beam identifier, and the PDCCH is configured to include resource allocation information for the user equipment.

### SUMMARY

The object of the present application is solved by the independent claims. Advantageous embodiments are described by the dependent claims. The invention is defined in the embodiment on page 14, lines 9-30 and related embodiments. Other embodiments, examples, or aspects that do not fall under the scope of the claims are useful for understanding the invention.

### BRIEF DESCRIPTION OF THE DRAWINGS

The following detailed description refers to the accompanying drawings. The same reference numbers are used in different drawings to identify the same or similar elements.
- **Fig. 1**: shows an example for the configuration of different search spaces (SS0s) by two different SSBs, SSB0 and SSB1;
- **Fig. 2**: shows an exemplary timing (offset) according to an embodiment relative to the beam reporting from a UE, based on which the UE starts monitoring a corresponding CORESET 0,
- **Fig. 3**: shows embodiment of an implicit "best SSB" indication of the UE 302,
- **Fig. 4**: shows a flow chart of a procedure for the CORESET to be monitored by the UE 302 during beam failure recovery (BFR) according to a more detailed exemplary embodiment,
- **Fig. 5**: shows one example embodiment, where one CORESET contains PDCCH with both CSS and USS;
- **Fig. 6**: shows an example embodiment of an intra-band carrier aggregation (CA) or multiple bandwidth parts (BWP) scenario, where a CORESET in a primary cell (PCell) or one BWP is used for PDCCH with CSS, and another CORESET in a secondary cell (SCell) or another BWP is used for PDCCH with USS,
- **Fig. 7**: shows exemplary extended RACH procedure and related RRC connection establishment according to an embodiment, in which the UE reports its UE capabilities on support of simultaneous reception of multiple beams,
- **Fig.8**: shows an architecture of a system of a network in accordance with some embodiments,
- **Fig. 9**: shows another architecture of a system of a network in accordance with some embodiments,
- **Fig. 10**: shows example components of a device 1000 in accordance with some embodiments.,
- **Fig. 11**: shows example interfaces of baseband circuitry 1004 comprised by device 1000 in accordance with some embodiments,
- **Fig. 12**: shows a control plane protocol stack of the device 1000 in accordance with some embodiments,
- **Fig. 13**: shows a user plane protocol stack of the device 1000 in accordance with some embodiments,
- **Fig. 14**: shows a block diagram illustrating components, according to some example embodiments, able to read instructions from a machine-readable or computer-readable medium (e.g., a non-transitory machine-readable storage medium) and perform any one or more of the methodologies discussed herein.

### DETAILED DESCRIPTION

In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B).

Aspects of the invention relate to mechanisms for handling search spaces defined on a downlink control channel, and further to control signaling related to a downlink control channel. These individual aspects and their embodiments described herein below may also be combined with each other. The different aspects and their embodiments discussed herein below are usable in 3GPP 5G (3GPP NR) systems and may be advantageously used in those systems using beam forming to compensate for path loss caused by atmospheric attenuation, improve the signal to noise ratio (SNR), and/or enlarge the coverage area, for example, when operating the communication systems (at least in part) in a high frequency band (e.g. in the millimeter wave (mmWave) spectrum, e.g. above 6 GHz).

In 3GPP Long Term Evolution (LTE)-based systems, a search space is defined so as to allow UE to monitor a certain number of blind decoding candidates for each aggregation level in each subframe. More specifically, UE would perform multiple blind decodings within search space for potential downlink control information (DCI) messages. For 3GPP NR, similar concept can be considered for the design of search space. In an aspect of this document and according to its embodiments, a UE can be configured with one search space (SS) or more than one SSs for physical downlink control channel (PDCCH) monitoring, which can be linked to a control resource set (CORESET). In embodiments described herein, a common and a UE specific search space can be defined for 3GPP NR: A downlink (DL) control channel (e.g. PDCCH) could have a common search space (which can be mainly used to schedule common control messages) and a UE specific search space (which can be used to schedule unicast data).

### Identification of "best beam" and CORESET 0 that is monitored by UE

As defined in 3GPP NR, a control resource set (CORESET) is a set of resource element groups (REG) under a given numerology within which the UE attempts to blindly decode downlink control information (DCI). The REGs may or may not be frequency contiguous. When the CORESET spans multiple OFDM symbols in the time domain, a control channel candidate (PDCCH) is mapped to multiple OFDM symbols or to a single OFDM symbol. The 3GPP NR evolved NodeB (gNB) can inform UE which control channel candidates are mapped to each subset of OFDM symbols in the CORESET.

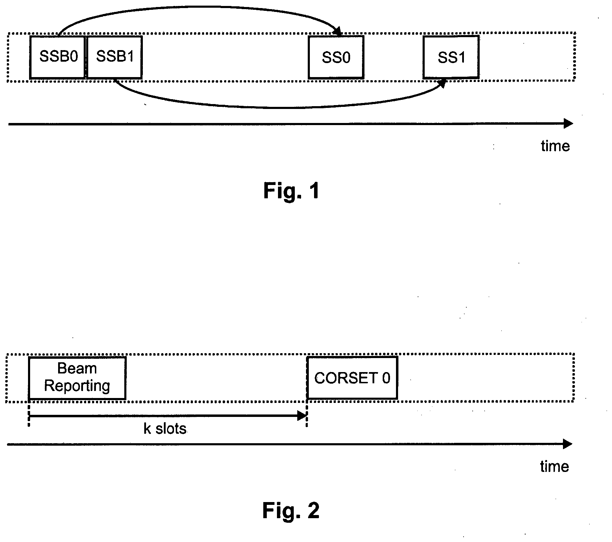

In 3GPP NR, in one aspect of this document and according to its embodiments, a UE is configured with one search space (SS) or more than one SSs for physical downlink control channel (PDCCH) monitoring, which can be tied to a control resource set (CORESET). The SS 0 and CORESET 0 can be configured by a physical broadcasting channel (PBCH) in a synchronization signal block (SSB). For example, the PBCH can include a master information block (MIB) that configures the - so-called - CORESET 0. The CORESET 0 is spatially quasi-co-located (QCLed) with the SSB which configured it. Accordingly, a SSB is associated with a corresponding CORESET 0 providing one or more SSs that should be monitored by the UE. There could be multiple SSBs in the system which would configure different SS 0 as shown in Fig. 1. Fig. 1 shows an example where two different search spaces (SS0s) are configured by two different SSBs, SSB0 and SSB1.

However, there may not only be one CORESET 0 defined by the SSBs that contains the PDCCH, but some other SS may also be tied to CORESET 0. The PDCCH for unicast physical downlink shared channel (PDSCH) - i.e. the USS - may also, in addition to the common PDCCH - i.e. the CSS - be carried by the SS tied to CORESET 0. In this scenario the gNB and UE need to identify which CORESET 0 out of the different available CORESETs 0 configured by the PBCH (MIB) in different SSBs is to be monitored. One possible solution to this problem to implement a monitoring rule according to which the CORESET 0 configured by the "best SSB" should be monitored by UE. However, one technical issue arising with such solution is the ambiguity in identifying this "best SSB".

Therefore, embodiments of a first aspect disclosed herein include techniques for indication of the "best SSB" for CORESET 0 monitoring. These embodiments may include an implicit indication by means of UE beam reporting (or CSI reporting), and explicit control signaling by a gNB. In general, there may be two implementations to indicate/update the "best SSB": One implementation is an implicit scheme, e.g. based on UE beam reporting (or CSI reporting), and the other implementation is an explicit scheme, e.g. based on explicit gNB control signaling.

### Implicit "best SSB" indication for CORESET 0 monitoring

In the following embodiments, it may be assumed that the UE has received at least two different SSBs, each of which configuring a CORESET 0. As noted the SSBs are received from a gNB. The SSBs contain system information that comprises the configuration of the CORESET 0 identified by the respective SSB. This system information is, in one example, a MIB signaled via the PBCH contained by the respective SSB. Hence, the UE is configured with different CORESETs 0, and the UE and gNB need to agree which CORESET 0 is to be or will be monitored by the UE. As will become more apparent, the following solutions are based on the UE determining the CORESET 0 that it will monitor and informing the gNB on this determination using an implicit indication of the "best SSB", i.e. the SSB (e.g. using an SSB index) that has configured the CORESET 0 the UE will monitor.

According to one embodiment, as shown in Fig. 2, the "best SSB" can be implicitly indicated by UE beam reporting (or channel state information (CSI) reporting). Then in one beam reporting instance at slot n, if at least one SSB index is reported in the beam reporting 201, the "best SSB" after slot n+k could be the SSB index (SSB x) reported with highest Layer 1-Reference Signal Receiving Power (L1-RSRP), where k may be fixed per subcarrier spacing (SCS) or across SCS, e.g. k=4, or may be configured by higher layer signaling. Hence, in this example, the UE could perform beam reporting on multiple SSBs (identified by respective SSB indices) and would indicate the beam (channel) quality of the beam, for example, the Ll-RSRP of the respective beam. The "best SSB" would be the one with the best channel quality and the UE would monitor the CORESET 0 of this "best SSB".

As shown in Fig. 2, the beam reporting 201 provided from the UE to the gNB may for example indicate the SSB index (SSB x) with the strongest L1-RSRP in slot n, and k slots after the slot n in which the beam report is sent by the UE, the UE starts monitoring the CORESET 0 that is QCLed with the SSB (SSB x) corresponding to the reported SSB index with the highest/best L1-RSRP. Due to the SSB index reported to the gNB, the gNB would know which CORESET 0 will be monitored by the UE, and can send the PDCCH on the beam associated with the "best SSB" (SSB x) corresponding to the reported SSB with the highest/best L1-RSRP.

Further, the UE may be configured by the gNB with a channel state information reference signal (CSI-RS) resources for beam measurements on a beam associated with a SSB. Since SSB and CSI-RS resources to be used for beam measurement can be configured by RRC signaling, the UE may expect at least one (1) SSB resource to be configured for beam measurement. The UE can use the configured CSI-RS for the beam measurements and can report or update the "best SSB" of the UE on which the UE will expect the CORESET 0 using beam reporting (or CSI reporting) in the fashion described above. The configuration of the CSI-RS for the different SSBs, respectively, their associated beams can be signaled via RRC signaling. Accordingly, the mechanism of providing an implicit indication of the "best SSB" (or "best beam") that is associated with the CORESET 0 that will be monitored by the UE can not only be used for initially informing the gNB on which CORESET 0 will be monitored by the UE, but also to update the CORESET 0 that will be monitored. As noted, there may be a predetermined "delay" relative to the slot containing the beam reporting after which the UE and gNB expect the "change" to an update CORESET 0.

The UE's expectation/decision on which CORESET 0 is to be monitored may be based on the condition whether there is CORESET 0 configured for current bandwidth part (BWP). For example, the CORESET 0 within the current BWP may be prioritized for monitoring over other CORESETs 0 not configured in the current BWP.

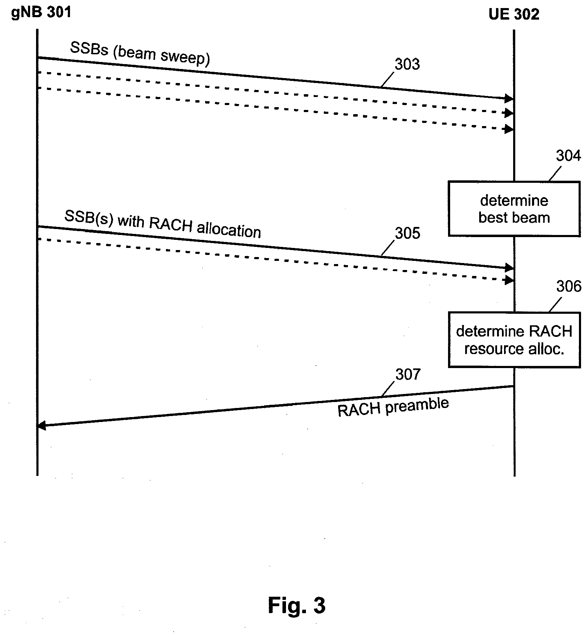

Fig. 3 shows another example embodiment of an implicit "best SSB" indication of the UE 302. In this example, the "best SSB" or "best beam" and thus the CORESET 0 that will be monitored by the UE is indicated to the gNB by the use of a PRACH resources associated with the "best SSB" or "best beam". This example embodiment may be used in a scenario, where the UE 302 is RRC idle mode (sometimes also RRC_IDLE or RRC_Idle state) and is attempting to access the network or upon beam failure, when as part of beam recovery. For initial access, the gNB 301 may transmit 303 a set of SSB bursts that are associated with different beams. The SS blocks (SSBs) may each comprise a primary synchronization signal (PSS), as secondary synchronization signal (SSS) and a physical broadcast channel (PBCH) that configures, for the beam associated with the given SSB, the CORESET 0 to be monitored by the UE via MIB. The MIB provide basic parameters for initial access. DeModlation Reference Signals (DMRS) can be transmitted within the OFDM symbols of a SSB (e.g. a SSB may span 4 ODFM symbols in time) to facilitate channel measurement on the beam. The beams may be sent from the gNB 301 to cover a spatial area according to pre-specified intervals and directions. A UE 302 that is attempting to access the 3GPP NR system will perform a search for synchronization signals contained in the SSBs transmitted by the gNB 301 in order to establish synchronization with the frame structure. Further, the UE performs measurements on the DMRS associated with the respective SSBs received at the UE 302. For example, the UE 302 can measure L1-RSRP for based on the DMRS for each received SSB. After establishing (radio) frame synchronization, the UE 302 can also read the PBCH (which can include the master information block (MIB) identifying the CORESET 0). Based on the channel measurements for the one or more beams received at the UE, the UE can determine 304 the "best beam" (or "best SSB") and the UE 302 waits for the gNB 301 to schedule the physical random access channel (PRACH) opportunity for the best beam that the UE 302 that has been determined by the UE 302 in step 303. The UE 302 may perform random access on a scheduled PRACH opportunity and implicitly inform the selected serving infrastructure (i.e. gNB 301 in this example embodiment) of the beam or beams that can be received at the UE (equivalent to the optimal direction or set of optimal directions through which the infrastructure should steer its beam(s)).

For each SSB transmitted 303 by the gNB 301, the gNB 301 specifies 305 one or more PRACH resources with a certain time and frequency offset and direction, so that the UE 302 can determine 306 when to transmit the RACH preamble for the "best beam" determined in step 304. As the RACH resources are associated with a given beam, the transmission 307 of the RACH preamble on a given PRACH resource indicates to the gNB 301, which is the "best beam" of the UE 302, and thus the gNB 301 is implicitly also aware of the CORESET 0 that will be monitored by the UE 302.

Another exemplary embodiment of "best SSB" indication for CORESET 0 monitoring may be, for example, used in situations, where the UE 302 is already in RRC connected mode (sometimes also RRC_CONNECTED or RRC_Connected state). Upon beam failure, the UE 302 may start beam failure recovery (BFR). During beam recovery, if the UE 302 cannot recover its best beam in the active bandwidth part (BWP), the UE 302 may fallback to initial BWP and monitor CORESET 0 on this initial BWP, where the CORESET 0 should be the one identified with the "best SSB".

In this example embodiment, the "best SSB" could be the one that is spatially QCLed with the new identified channel state information-reference signal (CSI-RS) or SSB resource during new beam identification, which is associated with the contention free (CF) PRACH the UE 302 transmitted for beam failure recovery. If no new beam from the configured CF PRACH is configured, the UE 302 could use a contention based (CB) PRACH to transmit the beam failure recovery request and the CORESET 0 to be monitored may be the one configured by the SSB which is associated with the CB-PRACH resource the UE 302 transmitted.

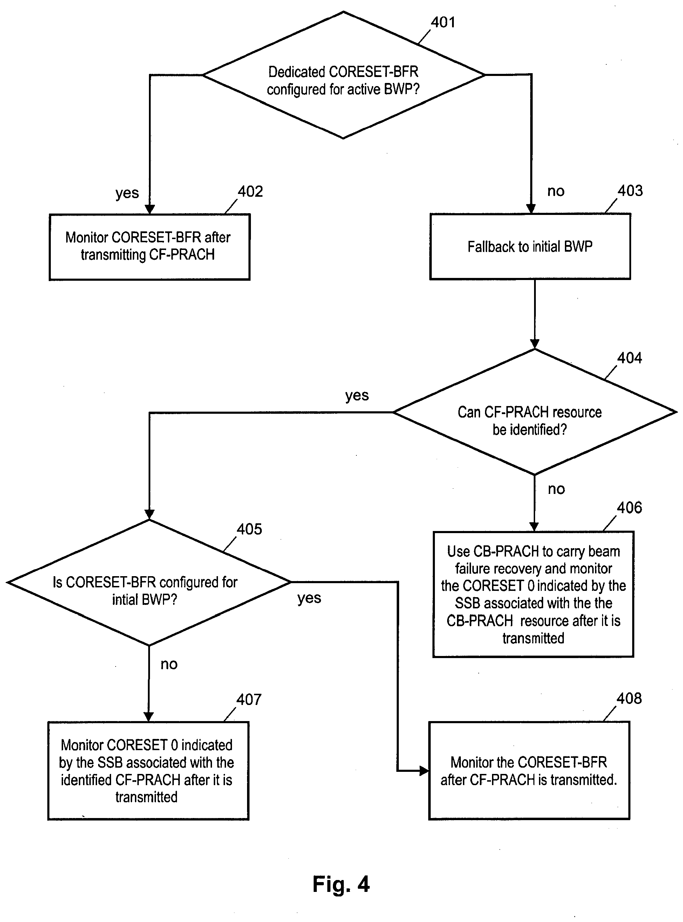

Fig. 4 illustrates a procedure for the CORESET to be monitored by the UE 302 during beam failure recovery (BFR) according to an exemplary embodiment. As part of a beam failure recovery process, the UE 302 may first determine 401, whether or not a dedicated CORESET for beam failure recovery (CORESET-BFR) has been configured in the active BWP. If this is the case, the UE 302 transmits a CF-PRACH (RACH preamble) and, thereafter, starts monitoring 402 the CORESET-BFR for the active BWP. The CF-PRACH may be configured by the gNB 301 by means of RRC signaling. If there is no CORESET-BFR configured for the active BWP, the UE 302 will fallback 403 to the initial BWP. The initial BWP could be for example configured by the gNB 301 using RRC signaling as part of the RACH procedure upon initial access of the UE 302. If the UE 302 can identify 404 a CF-PRACH resource and if a CORESET-BFR has been configured (step 405) in the initial BWP, the UE 302 will use the identified CF-PRACH resource to transmit the RACH preamble and will thereafter monitor 408 the CORESET-BFR that has been configured in the initial BWP. Further for new beam identification, if no CORESET-BFR is configured for initial BWP, the UE may expect gNB to configure at least one PRACH resources which is associated with one SSB or one CSI-RS which is spatially QCLed with one SSB. Hence, if the UE 302 can identify 404 a CF-PRACH resource, but no CORESET-BFR has been configured by gNB 301 (step 405) in the initial BWP, the UE 302 will transmit a RACH preamble within a CF-PRACH resource and will subsequently monitor 407 the CORESET 0 indicated by the SSB that is associated with the CF-PRACH resource. If the UE 3022 determines 405 that it cannot identify a CF-PRACH resource, it will transmit a RACH preamble on a CB-PRACH to carry beam failure recovery and monitor 406 the CORESET 0 indicated by the SSB associated with the CB-PRACH resource after the preamble has been transmitted..

### Explicit "best SSB" indication for CORESET 0 monitoring

In an alternative embodiment, instead of implicitly indicating the best beam and CORESET 0 that will be monitored by the UE 302 through use of some PRACH resource, the gNB 301 could explicitly indicate the "best SSB" for a UE 302 to monitor CORESET 0 by RRC signaling using for example RRC information element (IE) or medium access control (MAC) control element (CE). For example, if only one transmission configuration indicator (TCI) state is configured by RRC, the configured TCI state may be spatially QCLed with one SSB (for example, according to QCL Type-D), and the UE 302 may monitor the CORESET 0 configured by this SSB. In general, a TCI state indicates a transmission configuration which includes QCL-relationships between the DL reference signals (RSs) in one RS set and the PDSCH DMRS ports.

If multiple TCI states are configured by RRC, the gNB 301 can use the MAC CE to configure the "best SSB". The MAC CE may include some or all of the following elements:
- Component Carrier (CC) index,
- Bandwidth part (BWP) index,
- CORESET ID, and
- TCI state indicator.

For CORESET 0, the UE 302 may expect the indicated TCI state includes or is linked to a SSB index or a CSI-RS resource which is spatially QCLed with one SSB (e.g. QCL-TypeD). Then the UE 302 may monitor the CORESET 0 configured by this new SSB index after MAC CE indication.

### Monitoring PDCCH with CSS and USS

A CORESET is defined as a set of REGs with one or more symbol duration under a given numerology within which UE attempts to blindly decode physical downlink control channel (PDCCH) carrying downlink control information (DCI). In a CORESET, two types of search spaces including common search space (CSS) and UE specific search space (USS) can be configured. The CSS and USS may or may not be transmitted from the network (e.g. gNB) with different or identical periodicities. The UE should monitor the CORESET resources for the USS and CSS depending according to their (respective) periodicities. For each CORESET, a parameter (TCI-StatesPDCCH) can be configured by the gNB which is used for QCL information of DMRS AP for PDCCH monitoring. This indicates that one Tx beam or one corresponding Rx beam is associated with one CORESET. This QCL information can be associated with one SSB index or CSI-RS index. If both CSS and USS are within the same CORESET, they are transmitted by the gNB on the same beam. However, if CSS and USS are in a different CORESETs, different beams may be used by the gNB to transmit the CSS and USS. It is also possible for the gNB to multiplex the CSS and the USS in a FDM manner, in which case there is a need to indicate which beam is used.

This indicates that for 3GPP NR and in accordance with embodiments of another aspect of this disclosure, a CORESET may contain the PDCCH with common search space (CSS) and UE specific search space (USS).

For example in a 3GPP NR-based system, a PDCCH with CSS may be quasi co-located (QCLed) with synchronization signal block (SSB). In this case, an association rule between PDCCH with CSS and SSB may be specified to help UE to reduce power consumption by using same receive (Rx) beam for SSB detection and the monitoring of PDCCH with CSS. Further, PDCCH with USS may be QCLed with channel state information-reference signal (CSI-RS). Note that different transmit (Tx) beam may be used for the transmission of SSB and CSI-RS. For instance, Tx beam with wider beamwidth may be employed for the transmission of SSB QCLed with the PDCCH with CSS to ensure wider coverage, while Tx beam with narrower beamwidth may be employed for the transmission of CSI-RS and PDCCH with USS for better link budget.

Given that the gNB can use different Tx beams for the transmission of PDCCH with CSS and USS, different Rx beams may need to be monitored at the UE for receiving the CSS and USS of the PDCCH. Therefore, the PDCCH for CSS and USS may not be QCLed with the same Rx spatial parameters. In case when UE is only equipped with one panel or one antenna subarray, and when PDCCHs with CSS and USS are multiplexed in a FDM manner or partially/fully overlapped, a UE cannot monitor both PDCCHs with CSS and USS simultaneously.

The following aspect and its embodiments described in the following are directed to this case, where the UE is only capable of receiving one Rx beam at a time. The embodiments suggest different mechanisms on monitoring PDCCH with CSS and USS in beamformed system in this scenario.

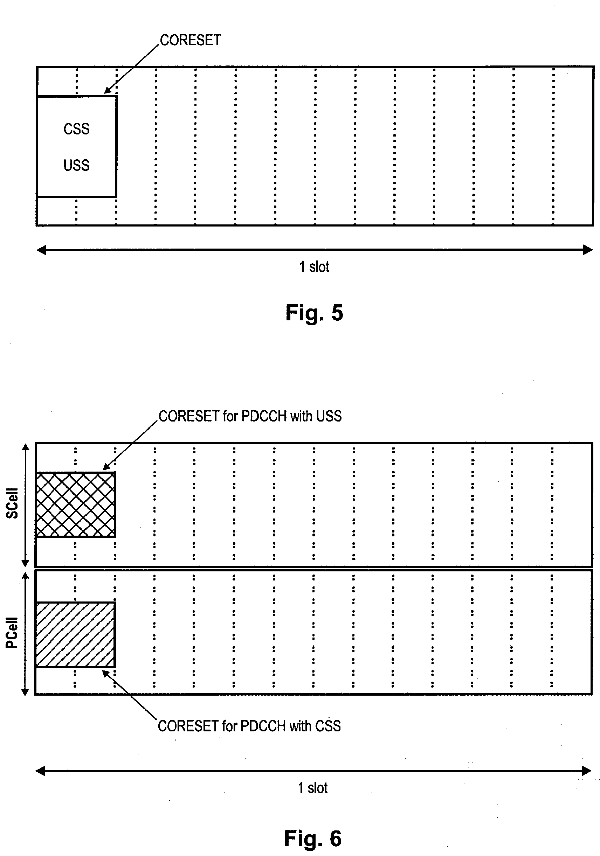

As mentioned above, a CORESET may include a PDCCH with both, CSS and USS for a given UE. Fig. 5 illustrates one example where one CORESET contains PDCCH with both CSS and USS. In Fig. 5, the CSS and USS are multiplexed in a frequency division multiplexing (FDM) manner within a CORESET. Depending on the detailed search space design, PDCCH with CSS and USS within a CORESET may be multiplexed in a time division multiplexing (TDM) manner, FDM manner or a combination thereof, and/or may be partially or fully overlapped.

Given that different Tx beams can be applied for the transmission of PDCCH with CSS and USS, at the UE (receiver), different Rx beams may need to be employed for monitoring the PDCCH with CSS and USS. As noted above, in case when UE is only equipped with one panel or one antenna subarray, and when PDCCHs with CSS and USS are multiplexed in a FDM manner or partially/fully overlapped, UE may not monitor both PDCCH with CSS and USS simultaneously.

Note that similar issue may also exist for intra-band carrier aggregation (CA) or multiple bandwidth parts (BWP) scenario where CORESET in Primary cell (PCell) or one BWP is used for PDCCH with CSS and CORESET in secondary cell (SCell) or another BWP is used for PDCCH with USS, as shown in Fig. 6. In case when the UE is only equipped with one panel, the UE cannot monitor PDCCH with CSS in PCell or in one BWP and PDCCH with USS in SCell or in another BWP simultaneously if different Rx beams are applied for the PDCCH monitoring. Accordingly, this aspect of the disclosure is not only applicable to the use of different beams for transmission of the USS and CSS of the PDCCH, but may also be applied to this scenario.

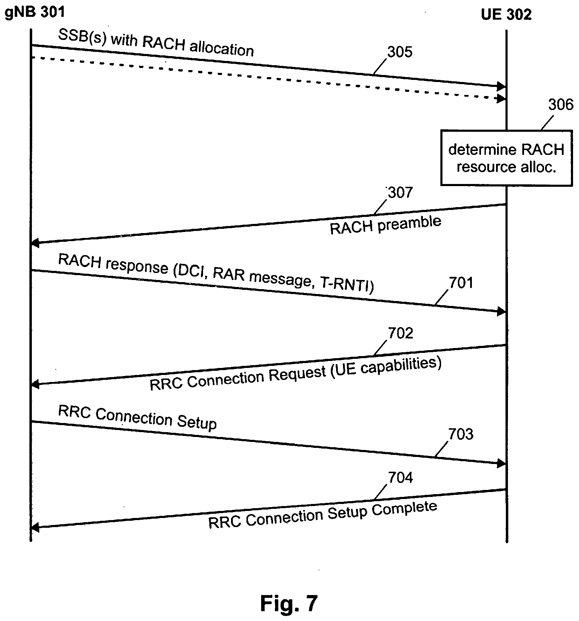

Whether or not the UE can monitor USS and CSS of a PDCCH on different beams may depend, for example, on the UE capabilities and/or the channel conditions. If the gNB was aware of these information, the gNB could configure the transmission of the CSS and USS accordingly, e.g. by transmitting the PDCCH with CSS and USS on a single beam (as discussed later herein) or on one or more beams that can be simultaneously received at the UE. The UE may report its UE capabilities for example as part of a RRC connection setup procedure, or RCC connection reconfiguration procedure. The gNB may explicitly request the UE to report its capabilites, for example, as part of a RRC connection setup procedure that is following the RACH procedure upon initial access of the UE. An example procedure of a RACH procedure and related RRC connection establishment is shwon in Fig. 7. Note that in one example, Fig. 7 may be considered an extension of the procecure shown in Fig. 3. As discussed already in connection with Fig. 3, the UE 302 initiates the RACH procedure by sending a RACH preamble on a selected PRACH resource to the gNB 301 (PRACH transmission). The RACH preamble is sometimes also referred to as Message 1 of the RACH procedure.

After receiving the RACH preamble at the gNB 301, the gNB 301 will reply 701 to the UE 302 by sending a PRACH response, which is sometimes referred to as Message 2. The PRACH response sent by the gNB 301 comprises *inter alia* an uplink grant for the so-called Message 3 of the RACH procedure, which may carry the RRC connection request of the UE 302, as discussed below. The UE 302 attempts to detect and decode the PDCCH (including the DCI scrambled with the RA-RNTI) within a predetermined time period (RAR-window) and if successful, it can receive the random access response (RAR) on the PDSCH, which comprised an uplink grant for Message 3. The PRACH response may also be used by the gNB 301 to assign a temporary CRNTI (T-CRNTI) to the UE 302. The RA-RNTI may determined by the gNB 301 (and UE 302) based on the PRACH (RACH resource) in which the random access (RACH) preamble is transmitted by the UE 302.

If the UE 302 successfully decoded the DCI on the PDCCH and the RAR message on PDSCH, the UE 302 may then send 702 an RRC connection request on the allocated uplink resources. The T-CRNTI signalled by the gNB 301 in the PRACH response may be used by the UE 302 for transmitting the RRC connection request. In one example embodiment, the RRC connection request may comprise an indication of the UE capabilities. In one example, the UE capabilities may include an indication (e.g. an information element (IE)) to the gNB 301 whether or not the UE 302 is capable of receiving more than one Rx beam simultaneously. The UE 302 indication could for example indicate the number of simultaneous Rx beams (in a beam group) supported by the UE 302, or the UE 302 could indicate its number of antenna panels/antenna arrays.

In response to the RRC connection request from the UE 302, the gNB 301 may reply 703 by sending a RRC connection setup message to the UE 302. This step may also contain a contention resolution step, which is however not relevant in connection with the reporting of the UE capabilities. The RRC connection setup is finalized by the UE 302 confirming the RRC connection establishment by transmitting 704 a RRC connection setup complete message to the gNB 301.

Note that in the example given in Fig. 7, the UE 302 includes UE cability information in the RRC connection request message. Alternatively, the gNB 301 may explicitly request such information from the UE 302. For example, the gNB 301 could include an request for UE capability information in the RRC connectino setup message transmitted 703 to the UE 302, and the UE 302 could include the requested UE capabilities in the RRC connection setup complete message.

Irrespective of the implemenation, the gNB 301 becomes aware on the UE capabilities upon finishing the RRC connection setup and may consider the UE capabilities, in particular, information on support of multiple Rx beams at the UE 302 for allocating the CSS and USS to the PDCCH on one or more beams and/or for understanding the default behaviour of the UE 302 in terms of reception of CSS and/or USS of the PDCCH in case CSS and USS are transmitted on different beams by the gNB 301.

According to a further embodiment, the UE capability information may alternatively or in addition indicate the capability of simultaneous Rx beamforming capability e.g., which beams cannot be formed or used at the same time, or which beams can be formed or used at the same time, etc., can be reported to gNB as part of UE capability reporting.

In another embodiment, it is assumed that the UE 302 only supports reception on one Rx beam at a time (e.g. the UE has only one antenna panel). Accordingly, in this example embodiment, the UE 302 is not capable of simultaneous multiple RX beams reception and may assume the CSS and USS within a same CORESET are associated with a single Rx beam. In other words, the CSS and USS within a same CORESET may be quasi co-located with respect to delay spread, Doppler spread, Doppler shift, average gain, and average delay unless signaled by higher layers. The gNB 301 learns about the UE 302 only supporting reception on one Rx beam at a time based on the UE capability reporting, and may thus ensure that the PDCCH with CSS and USS are transmitted in a single CORESET on a single Tx beam, so that CSS and USS of the PDCCH can be received and decoded by the UE 302. A TX beam may be defined by the CSI-RS or SSBs through the TX beam.

In another embodiment, in case when UE 302 is not capable of supporting simultaneous multiple Rx beams, after gNB 301 receives UE capability information reporting as discussed in connetion with Fig. 7, the gNB 302 does not perform FDM of the PDCCH with CSS and USS in a shared CORESET. As noted above, the UE 302 may report its capability of the number of beams in a beam group, and the gNB 301 can determine whether the UE 302 can support simultaneous multiple Rx beams. For example, if the number of beams in a beam group is more than 1, the UE may be able to receive more than 1 beams simultaneously. In addition, the gNB 301 may not configure FDM of multiple CORESETs which contain PDCCH with CSS and USS separately. In one example, the common CORESET (containing the CSS) and UE specific COREST (containing the USS) may be multiplexed in a TDM manner.

In some implementations, it may not be desirable for the gNB 301 to transmit the USS and CSS of the PDCCH on the same beam. In an embodiment where the USS and CSS are transmitted on different beams by the gNB301 and in case when UE 302 is not capable of supporting simultaneous multiple Rx beams, UE 302 may be not expected to monitor UE specific PDCCH candidates (i.e. USS) in the CORSET where CSS is located. Hence, in this case, the gNB 301 knows from the UE capabilties that the UE 302 support only reception of a single beam at a time, but the gBN 301 transmits the USS and CSS of the PDCCH on distinct beams, the gNB 301 assumes that the UE 302 will only be capable of monitoring the CSS of the PDCCH and will therefore not use the USS for the UE 302. This solution may be particularly suitable in a scenario, where a UE 302 entered from connected mode into idle mode, wherein the UE 302 should be able to receive paging messages in the CSS of the PDCCH.

Alternatively, the UE 302 may only monitor PDCCH with USS and skip the monitoring of PDCCH with CSS. This solution may be useful in a scenario, where the UE 302 is in connected mode and can receive dedicated DCI on the USS of the PDCCH.

In an embodiment of the invention, instead of such static configuration, in case when UE is not capable of supporting simultaneous multiple Rx beams, certain priority rules may be defined for the case when PDCCH with CSS and USS are multiplexed in a FDM manner in a same slot or not. The priority rules may be for example depending on the RRC connection state of the UE 302, e.g. depending on whether the UE is in RRC idle mode or RRC connected mode, as noted above. In another alternative, the UE 302 may be expected to monitor the CSS of the PDCCH (only) if the PDCCH is sent at a paging occasion, and the UE 302 may otherwise monitor the USS of the PDCCH.

In another option, whether to monitor PDCCH with CSS or USS can be configured by higher layers via 3GPP NR minimum system information (MSI), NR remaining minimum system information (RMSI), NR system information block (SIB) or radio resource control (RRC) signalling.

Note that this may also depend on the specific broadcast information (system information). In one example, in case when PDCCH scheduling RMSI is multiplexed with PDCCH scheduling unicast data in a FDM manner, and UE 302 may not be capable of supporting simultaneous multiple Rx beams, UE 302 may skip monitoring the PDCCH scheduling RMSI and only monitor PDCCH scheduling unicast data.

According to the embodiment of the invention, when the common DCI (also sometimes referred to a group DCI for group communication) carries pre-emption indication (PI), the UE 302 is be configured by the gNB 301 to prioritize monitoring of CSS of the PDCCH carrying the common DCI with PI in case different QCL configurations for associated PDCCH candidates compared to that for UE-specific DCI. As another variant, it may be specified that the UE always prioritizes monitoring of common DCI with PI in case different QCL configurations for associated PDCCH candidates compared to that for the UE-specific DCI if the monitoring instance for common DCI with PI is within a specified or configured number of symbols or slots from the instance the latest PDSCH scheduling instance.

In yet another example, when the UE 302 is configured to monitor for group-common PDCCH with slot format indication (SFI), the UE 302 can be configured with a CORESET with at least one PDCCH candidate (for the group-common PDCCH) and QCL-ed to a certain SS block. Beam sweeping based transmission of group-common PDCCH using SFI in different time domain resources (OFDM symbols) may not be beneficial due to increased latency in acquiring the SFI at the UE with respect to slot length. Alternatively, beam sweeping based approaches may be supported only when the SFI monitoring periodicity and possibly the number of slots the SFI applies are greater than a certain number of slots N (≥ 1). In another embodiment, the UE is specified or configured via UE-specific RRC signaling to assume the same QCL and possibly receiver beamforming assumptions for monitoring of group-common PDCCH with SFI and UE-specific PDCCH. Further, until RRC connection establishment, the UE may assume the same QCL and possibly receiver beamforming assumptions for monitoring of group-common PDCCH with SFI as that for any other common DCI or CORESET, e.g., for RMSI, OSI, paging, or random access-related PDSCH/PUSCH scheduling.

A further scenario and example embodiment relates to beam recovery. If the UE is configured with a CORESET or a set of PDCCH candidates spanning one or more aggregation levels (ALs) or a PDCCH search space within a CORESET for fallback operations (to a default beam, e.g. selected upon initial access) when in RRC connected mode, in an embodiment, the UE 302 can be configured with the corresponding CORESET or set of PDCCH candidates with QCL and possibly receiver beamforming assumptions as for a specific SS block or CSI-RS configuration. Such association may be based on a default SS block unless explicitly configured via RRC signaling.

In another example, the QCL for PDCCH monitoring for fallback (fallback DCI on PDCCH) may be defined with respect to that for PDCCH in UE-specific CORESET or search space (USS). Further, in case of FDM with different QCL configurations for fallback and UE-specific PDCCH, the monitoring of PDCCH corresponding to fallback is prioritized in conflicting monitoring occasions.

In another embodiment, in case when the UE 302 is not capable of supporting simultaneous multiple Rx beams and the gNB 301 transmits the USS and CSS of the PDCCH on different beams, the UE 302 can be configured by higher layers to use which Rx beams for the monitoring of PDCCH with CSS and USS. This is possible also when gNB 301 employs same Tx for the transmission of PDCCH with CSS and USS.

Note that in legacy NR, it was agreed that monitoring periodicity for UE specific PDCCH can be configured. In one embodiment, UE 302 can be configured by RRC signalling whether monitoring periodicity for UE specific PDCCH is per CORESET or per search space. Accordingly, this mechanis may be used to use TDM of CORESETs or search spaces, and the the UE 302 could then monitor different CORESETs or search spaces at different time instances on different reception beams.

In one embodiment, in addition to being configured with a default monitoring periodicity for a CORESET, the UE 302 can be configured, using UE-specific RRC signaling from the gNB 301, with a monitoring periodicity for a certain set of PDCCH candidates for one or more DCI formats with the same or different DCI payload sizes.

In one example, the monitoring periodicity can be either same as CORESET monitoring periodicity (this could be default behavior) or with periodicity P = *k* * *P_{CORESET},* where *k* >= 1 (i.e. a positive integer) and *P_{CORESET}* is the CORESET monitoring periodicity in number of slots or symbols or a combination of both. Note that the monitoring periodicity could be defined with an additional offset with respect to a slot boundary or a radio frame boundary.

Similarly, in one embodiment, a beam pair link (BPL) may be associated with one CORESET (i.e. all search spaces are on one beam) or one search space. UE 302 can be configured by RRC signalling whether one BPL is associated with one CORESET or one search space. Thus, in an embodiment, in addition to the BPL, that includes at least QCL and possibly associated receiver beamforming assumption, associated with a CORESET, the UE can be configured via UE-specific RRC signaling to monitor a certain set of PDCCH candidates for a set of one or more aggregation levels (ALs) for a given DCI format or DCI format size.

If quality of the BPL for CORESET falls below a threshold, the UE 302 may start a beam recovery procedure no matter whether the quality of UE specific PDCCH (i.e. the USS) fails or not. This behavior can be defined at least for UE-specific CORESET and possibly also common CORESETs with common DCIs or group-common PDCCH. The quality can be determined by hypothetical performance of PDCCH in CORESET or L1-RSRP, which can be pre-defined or configured by higher layer signaling.

In another embodiment, whether the PDCCH of CSS and USS can be QCLed with at least one of the following parameters is pre-defined or configured by higher layer signaling: average gain, delay spread, Doppler spread, Doppler shift, and average delay parameters, spatial Rx parameters. If the PDCCH of CSS and USS are QCLed with spatial Rx parameters, the UE 302 can simultaneously monitor both CSS and USS.

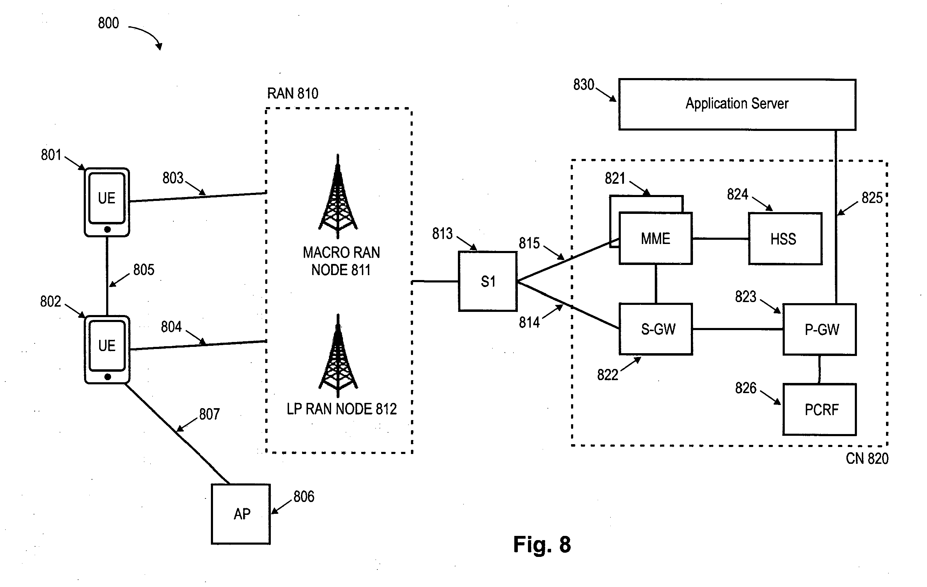

Fig. 8 illustrates an architecture of a system 800 of a network in accordance with some embodiments. The different aspects and embodiments described in connection with Figs. 1 to 7 may be implemented in system 800 as shown in Fig. 8. The system 800 is shown to include a user equipment (UE) 801 and a UE 802, which can correspond to the UE 302. The UEs 801 and 802 are illustrated as smartphones (e.g., handheld touchscreen mobile computing devices connectable to one or more cellular networks), but may also comprise any mobile or non-mobile computing device, such as Personal Data Assistants (PDAs), pagers, laptop computers, desktop computers, wireless handsets, or any computing device including a wireless communications interface.

In some embodiments, any of the UEs 801 and 802 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

The UEs 801 and 802 may be configured to connect, e.g., communicatively couple, with a radio access network (RAN) 810 - the RAN 810 may be, for example, an Evolved Universal Mobile Telecommunications System (UMTS) Terrestrial Radio Access Network (E-UTRAN), a NextGen RAN (NG RAN), as for example used in 5G NR, or some other type of RAN. The UEs 801 and 802 utilize connections 803 and 804, respectively, each of which comprises a physical communications interface or layer (discussed in further detail below); in this example, the connections 803 and 804 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a 5G New Radio (NR) protocol, and the like.

In this embodiment, the UEs 801 and 802 may further directly exchange communication data via a ProSe interface 805. The ProSe interface 805 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 802 is shown to be configured to access an access point (AP) 806 via connection 807. The connection 807 can comprise a local wireless connection, such as a connection consistent with any IEEE 802.11 protocol, wherein the AP 806 would comprise a wireless fidelity (WiFi) router. In this example, the AP 806 is shown to be connected to the Internet without connecting to the core network of the wireless system (described in further detail below).

The RAN 810 can include one or more access nodes that enable the connections 803 and 804. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). One or more of the access nodes in the RAN 810 may for example correspond to the gNB described herein above. The RAN 810 may include one or more RAN nodes for providing macrocells, e.g., macro RAN node 811, and one or more RAN nodes for providing femtocells or picocells (e.g., cells having smaller coverage areas, smaller user capacity, or higher bandwidth compared to macrocells), e.g., low power (LP) RAN node 812.

Any of the RAN nodes 811 and 812 can terminate the air interface protocol and can be the first point of contact for the UEs 801 and 802. In some embodiments, any of the RAN nodes 811 and 812 can fulfill various logical functions for the RAN 810 including, but not limited to, radio network controller (RNC) functions such as radio bearer management, uplink and downlink dynamic radio resource management and data packet scheduling, and mobility management.

In accordance with some embodiments, the UEs 801 and 802 can be configured to communicate using Orthogonal Frequency-Division Multiplexing (OFDM) communication signals with each other or with any of the RAN nodes 811 and 812 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 811 and 812 to the UEs 801 and 802, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UEs 801 and 802. The physical downlink control channel (PDCCH) may carry information about the transport format and resource allocations related to the PDSCH channel, among other things. It may also inform the UEs 801 and 802 about the transport format, resource allocation, and H-ARQ (Hybrid Automatic Repeat Request) information related to the uplink shared channel. Typically, downlink scheduling (assigning control and shared channel resource blocks to the UE 102 within a cell) may be performed at any of the RAN nodes 811 and 812 based on channel quality information fed back from any of the UEs 801 and 802. The downlink resource assignment information may be sent on the PDCCH used for (e.g., assigned to) each of the UEs 801 and 802.

The PDCCH may use control channel elements (CCEs) to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as resource element groups (REGs As discussed earlier herein above, the PDCCH is provide in a control resource set (CORESET), which is a set of resource element groups (REG) under a given numerology within which the UE attempts to blindly decode downlink control information (DCI). The REGs may or may not be frequency contiguous. When the CORESET spans multiple OFDM symbols in the time domain, a control channel candidate (PDCCH) is mapped to multiple OFDM symbols or to a single OFDM symbol. The access nodes in RAN 810 may inform UE 801, 802 which control channel candidates are mapped to each subset of OFDM symbols in the CORESET.

Four Quadrature Phase Shift Keying (QPSK) symbols may be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some embodiments may use concepts for resource allocation for control channel information that are an extension of the above-described concepts. For example, some embodiments may utilize an enhanced physical downlink control channel (EPDCCH) that uses PDSCH resources for control information transmission. The EPDCCH may be transmitted using one or more enhanced the control channel elements (ECCEs). Similar to above, each ECCE may correspond to nine sets of four physical resource elements known as an enhanced resource element groups (EREGs). An ECCE may have other numbers of EREGs in some situations.

The RAN 810 is shown to be communicatively coupled to a core network (CN) 820 -via an S1 interface 813. In embodiments, the CN 820 may be an evolved packet core (EPC) network, a NextGen Packet Core (NPC) network, or some other type of CN. In this embodiment the S1 interface 813 is split into two parts: the S1-U interface 814, which carries traffic data between the RAN nodes 811 and 812 and the serving gateway (S-GW) 822, and the SI-mobility management entity (MME) interface 815, which is a signaling interface between the RAN nodes 811 and 812 and MMEs 821.

In this embodiment, the CN 820 comprises the MMEs 821, the S-GW 822, the Packet Data Network (PDN) Gateway (P-GW) 823, and a home subscriber server (HSS) 824. The MMEs 821 may be similar in function to the control plane of legacy Serving General Packet Radio Service (GPRS) Support Nodes (SGSN). The MMEs 821 may manage mobility aspects in access such as gateway selection and tracking area list management. The HSS 824 may comprise a database for network users, including subscription-related information to support the network entities' handling of communication sessions. The CN 820 may comprise one or several HSSs 824, depending on the number of mobile subscribers, on the capacity of the equipment, on the organization of the network, etc. For example, the HSS 824 can provide support for routing/roaming, authentication, authorization, naming/addressing resolution, location dependencies, etc.

The S-GW 822 may terminate the S1 interface 813 towards the RAN 810, and routes data packets between the RAN 810 and the CN 820. In addition, the S-GW 822 may be a local mobility anchor point for inter-RAN node handovers and also may provide an anchor for inter-3GPP mobility. Other responsibilities may include lawful intercept, charging, and some policy enforcement.

The P-GW 823 may terminate an SGi interface toward a PDN. The P-GW 823 may route data packets between the EPC network 823 and external networks such as a network including the application server 830 (alternatively referred to as application function (AF)) via an Internet Protocol (IP) interface 825. Generally, the application server 830 may be an element offering applications that use IP bearer resources with the core network (e.g., UMTS Packet Services (PS) domain, LTE PS data services, etc.). In this embodiment, the P-GW 823 is shown to be communicatively coupled to an application server 830 via an IP communications interface 825. The application server 830 can also be configured to support one or more communication services (e.g., Voice-over-Internet Protocol (VoIP) sessions, PTT sessions, group communication sessions, social networking services, etc.) for the UEs 801 and 802 via the CN 820.

The P-GW 823 may further be a node for policy enforcement and charging data collection. Policy and Charging Enforcement Function (PCRF) 826 is the policy and charging control element of the CN 820. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 826 may be communicatively coupled to the application server 830 via the P-GW 823. The application server 830 may signal the PCRF 826 to indicate a new service flow and select the appropriate Quality of Service (QoS) and charging parameters. The PCRF 826 may provision this rule into a Policy and Charging Enforcement Function (PCEF) (not shown) with the appropriate traffic flow template (TFT) and QoS class of identifier (QCI), which commences the QoS and charging as specified by the application server 830.

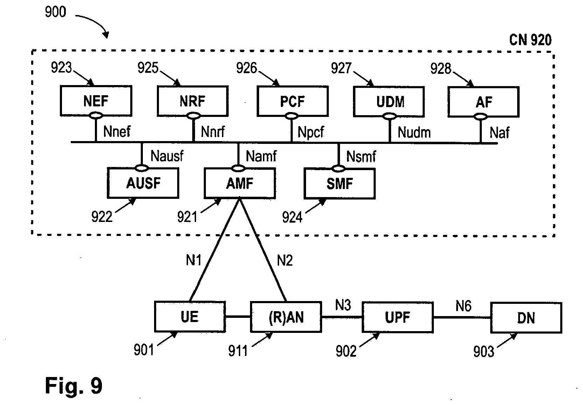

Fig. 9 illustrates an architecture of a system 900 of a network in accordance with some embodiments. The system 900 is shown to include a UE 901, which may be the same or similar to UEs 302, 801 and 802 discussed previously; a RAN node 911, which may be the same or similar to RAN nodes 301, 811 and 812 discussed previously; a User Plane Function (UPF) 902; a Data network (DN) 903, which may be, for example, operator services, Internet access or 3rd party services; and a 5G Core Network (5GC or CN) 920.

The CN 920 may include an Authentication Server Function (AUSF) 922; a Core Access and Mobility Management Function (AMF) 921; a Session Management Function (SMF) 924; a Network Exposure Function (NEF) 923; a Policy Control function (PCF) 926; a Network Function (NF) Repository Function (NRF) 925; a Unified Data Management (UDM) 927; and an Application Function (AF) 928. The CN 920 may also include other elements that are not shown, such as a Structured Data Storage network function (SDSF), an Unstructured Data Storage network function (UDSF), and the like.

The UPF 902 may act as an anchor point for intra-RAT and inter-RAT mobility, an external PDU session point of interconnect to DN 903, and a branching point to support multi-homed PDU session. The UPF 902 may also perform packet routing and forwarding, packet inspection, enforce user plane part of policy rules, lawfully intercept packets (UP collection); traffic usage reporting, perform QoS handling for user plane (e.g. packet filtering, gating, UL/DL rate enforcement), perform Uplink Traffic verification (e.g., SDF to QoS flow mapping), transport level packet marking in the uplink and downlink, and downlink packet buffering and downlink data notification triggering. UPF 902 may include an uplink classifier to support routing traffic flows to a data network. The DN 903 may represent various network operator services, Internet access, or third party services. NY 903 may include, or be similar to application server 830 discussed previously.

The AUSF 922 may store data for authentication of UE 901 and handle authentication related functionality. Facilitates a common authentication framework for various access types.

The AMF 921 may be responsible for registration management (e.g., for registering UE 901, etc.), connection management, reachability management, mobility management, and lawful interception of AMF-related events, and access authentication and authorization. AMF 921 may provide transport for SM messages between and SMF 924, and act as a transparent proxy for routing SM messages. AMF 921 may also provide transport for short message service (SMS) messages between UE 901 and an SMS function (SMSF) (not shown by Fig. 9). AMF 921 may act as Security Anchor Function (SEA), which may include interaction with the AUSF 922 and the UE 901, receipt of an intermediate key that was established as a result of the UE 901 authentication process. Where USIM based authentication is used, the AMF 921 may retrieve the security material from the AUSF 922. AMF 921 may also include a Security Context Management (SCM) function, which receives a key from the SEA that it uses to derive access-network specific keys. Furthermore, AMF 921 may be a termination point of RAN CP interface (N2 reference point), a termination point of NAS (N1) signalling, and perform NAS ciphering and integrity protection.

AMF 921 may also support NAS signalling with a UE 901 over an N3 interworking-function (IWF) interface. The N3IWF may be used to provide access to untrusted entities. N33IWF may be a termination point for the N2 and N3 interfaces for control plane and user plane, respectively, and as such, may handle N2 signalling from SMF and AMF for PDU sessions and QoS, encapsulate/de-encapsulate packets for IPSec and N3 tunnelling, mark N3 user-plane packets in the uplink, and enforce QoS corresponding to N3 packet marking taking into account QoS requirements associated to such marking received over N2. N3IWF may also relay uplink and downlink control-plane NAS (N1) signalling between the UE 901 and AMF 921, and relay uplink and downlink user-plane packets between the UE 901 and UPF 902. The N3IWF also provides mechanisms for IPsec tunnel establishment with the UE 901.

The SMF 924 may be responsible for session management (e.g., session establishment, modify and release, including tunnel maintain between UPF and AN node); UE IP address allocation & management (including optional Authorization); Selection and control of UP function; Configures traffic steering at UPF to route traffic to proper destination; termination of interfaces towards Policy control functions; control part of policy enforcement and QoS; lawful intercept (for SM events and interface to LI System); termination of SM parts of NAS messages; downlink Data Notification; initiator of AN specific SM information, sent via AMF over N2 to AN; determine SSC mode of a session. The SMF 924 may include the following roaming functionality: handle local enforcement to apply QoS SLAs (VPLMN); charging data collection and charging interface (VPLMN); lawful intercept (in VPLMN for SM events and interface to LI System); support for interaction with external DN for transport of signalling for PDU session authorization/authentication by external DN.

The NEF 923 may provide means for securely exposing the services and capabilities provided by 3GPP network functions for third party, internal exposure/re-exposure, Application Functions (e.g., AF 928), edge computing or fog computing systems, etc. In such embodiments, the NEF 923 may authenticate, authorize, and/or throttle the AFs. NEF 923 may also translate information exchanged with the AF 928and information exchanged with internal network functions. For example, the NEF 923 may translate between an AF-Service-Identifier and an internal 5GC information. NEF 923 may also receive information from other network functions (NFs) based on exposed capabilities of other network functions. This information may be stored at the NEF 923 as structured data, or at a data storage NF using a standardized interfaces. The stored information can then be re-exposed by the NEF 923 to other NFs and AFs, and/or used for other purposes such as analytics.

The NRF 925 may support service discovery functions, receive NF Discovery Requests from NF instances, and provide the information of the discovered NF instances to the NF instances. NRF 925 also maintains information of available NF instances and their supported services.

The PCF 926 may provide policy rules to control plane function(s) to enforce them, and may also support unified policy framework to govern network behaviour. The PCF 926 may also implement a front end (FE) to access subscription information relevant for policy decisions in a UDR of UDM 927.

The UDM 927 may handle subscription-related information to support the network entities' handling of communication sessions, and may store subscription data of UE 901. The UDM 927 may include two parts, an application FE and a User Data Repository (UDR). The UDM may include a UDM FE, which is in charge of processing of credentials, location management, subscription management and so on. Several different front ends may serve the same user in different transactions. The UDM-FE accesses subscription information stored in the UDR and performs authentication credential processing; user identification handling; access authorization; registration/mobility management; and subscription management. The UDR may interact with PCF 926. UDM 927 may also support SMS management, wherein an SMS-FE implements the similar application logic as discussed previously.

The AF 928 may provide application influence on traffic routing, access to the Network Capability Exposure (NCE), and interact with the policy framework for policy control. The NCE may be a mechanism that allows the 5GC and AF 928 to provide information to each other via NEF 923, which may be used for edge computing implementations. In such implementations, the network operator and third party services may be hosted close to the UE 901 access point of attachment to achieve an efficient service delivery through the reduced end-to-end latency and load on the transport network. For edge computing implementations, the 5GC may select a UPF 902 close to the UE 901 and execute traffic steering from the UPF 902 to DN 903 via the N6 interface. This may be based on the UE subscription data, UE location, and information provided by the AF 928. In this way, the AF 928 may influence UPF (re)selection and traffic routing. Based on operator deployment, when AF 928 is considered to be a trusted entity, the network operator may permit AF 928 to interact directly with relevant NFs.

As discussed previously, the CN 920 may include an SMSF, which may be responsible for SMS subscription checking and verification, and relaying SM messages to/from the UE 901 to/from other entities, such as an SMS-GMSC/IWMSC/SMS-router. The SMS may also interact with AMF 921 and UDM 927 for notification procedure that the UE 901 is available for SMS transfer (e.g., set a UE not reachable flag, and notifying UDM 927 when UE 901 is available for SMS).

The system 900 may include the following service-based interfaces: Namf: Service-based interface exhibited by AMF; Nsmf: Service-based interface exhibited by SMF; Nnef: Service-based interface exhibited by NEF; Npcf: Service-based interface exhibited by PCF; Nudm: Service-based interface exhibited by UDM; Naf: Service-based interface exhibited by AF; Nnrf: Service-based interface exhibited by NRF; and Nausf: Service-based interface exhibited by AUSF.

The system 900 may include the following reference points: N1: Reference point between the UE and the AMF; N2: Reference point between the (R)AN and the AMF; N3: Reference point between the (R)AN and the UPF; N4: Reference point between the SMF and the UPF; and N6: Reference point between the UPF and a Data Network. There may be many more reference points and/or service-based interfaces between the NF services in the NFs, however, these interfaces and reference points have been omitted for clarity. For example, an N5 reference point may be between the PCF and the AF; an N7 reference point may be between the PCF and the SMF; an N11 reference point between the AMF and SMF; etc. In some embodiments, the CN 920 may include an Nx interface, which is an inter-CN interface between the MME (e.g., MME 821) and the AMF 921 in order to enable interworking between CN 920 and CN 820.

Although not shown by Fig. 9, system 900 may include multiple RAN nodes 911 wherein an Xn interface is defined between two or more RAN nodes 911 (e.g., gNBs and the like) that connecting to 5GC 920, between a RAN node 911 (e.g., gNB) connecting to 5GC 920 and an eNB (e.g., a RAN node 811 of Fig. 8), and/or between two eNBs connecting to 5GC 920.

In some implementations, the Xn interface may include an Xn user plane (Xn-U) interface and an Xn control plane (Xn-C) interface. The Xn-U may provide non-guaranteed delivery of user plane PDUs and support/provide data forwarding and flow control functionality. The Xn-C may provide management and error handling functionality, functionality to manage the Xn-C interface; mobility support for UE 901 in a connected mode (e.g., CM-CONNECTED) including functionality to manage the UE mobility for connected mode between one or more RAN nodes 911. The mobility support may include context transfer from an old (source) serving RAN node 911 to new (target) serving RAN node 911; and control of user plane tunnels between old (source) serving RAN node 911 to new (target) serving RAN node 911.

A protocol stack of the Xn-U may include a transport network layer built on Internet Protocol (IP) transport layer, and a GTP-U layer on top of a UDP and/or IP layer(s) to carry user plane PDUs. The Xn-C protocol stack may include an application layer signaling protocol (referred to as Xn Application Protocol (Xn-AP)) and a transport network layer that is built on an SCTP layer. The SCTP layer may be on top of an IP layer. The SCTP layer provides the guaranteed delivery of application layer messages. In the transport IP layer point-to-point transmission is used to deliver the signaling PDUs. In other implementations, the Xn-U protocol stack and/or the Xn-C protocol stack may be same or similar to the user plane and/or control plane protocol stack(s) shown and described herein.

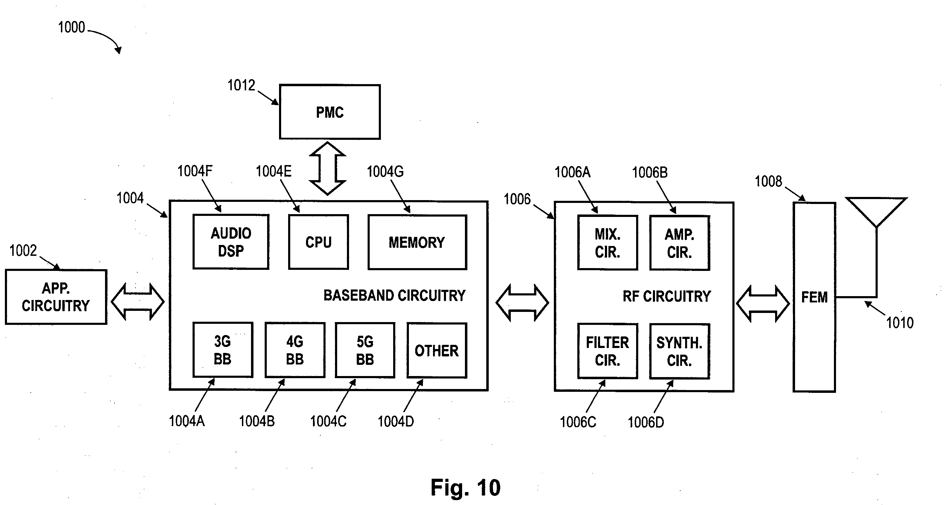

Fig. 10 illustrates example components of a device 1000 in accordance with some embodiments. In some embodiments, the device 1000 may include application circuitry 1002, baseband circuitry 1004, Radio Frequency (RF) circuitry 1006, front-end module (FEM) circuitry 1008, one or more antennas 1010, and power management circuitry (PMC) 1012 coupled together at least as shown. The components of the illustrated device 1000 may be included in a UE, such as UEs 302, 810, 802, or a RAN node, such as RAN nodes 301, 810, and 812. In some embodiments, the device 1000 may include less elements (e.g., a RAN node may not utilize application circuitry 1002, and instead include a processor/controller to process IP data received from an EPC). In some embodiments, the device 1000 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 1002 may include one or more application processors. For example, the application circuitry 1002 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 1000. In some embodiments, processors of application circuitry 1002 may process IP data packets received from an EPC.

The baseband circuitry 1004 may include circuitry such as, but not limited to, one or more single-core or multi-core processors. The baseband circuitry 1004 may include one or more baseband processors or control logic to process baseband signals received from a receive signal path of the RF circuitry 1006 and to generate baseband signals for a transmit signal path of the RF circuitry 1006. Baseband processing circuity 1004 may interface with the application circuitry 1002 for generation and processing of the baseband signals and for controlling operations of the RF circuitry 1006. For example, in some embodiments, the baseband circuitry 1004 may include a third generation (3G) baseband processor 1004A, a fourth generation (4G) baseband processor 1004B, a fifth generation (5G) baseband processor 1004C, or other baseband processor(s) 1004D for other existing generations, generations in development or to be developed in the future (e.g., second generation (2G), sixth generation (6G), etc.). The baseband circuitry 1004 (e.g., one or more of baseband processors 1004A-D) may handle various radio control functions that enable communication with one or more radio networks via the RF circuitry 1006. In other embodiments, some or all of the functionality of baseband processors 1004A-D may be included in modules stored in the memory 1004G and executed via a Central Processing Unit (CPU) 1004E. The radio control functions may include, but are not limited to, signal modulation/demodulation, encoding/decoding, radio frequency shifting, etc. In some embodiments, modulation/demodulation circuitry of the baseband circuitry 1004 may include Fast-Fourier Transform (FFT), precoding, or constellation mapping/demapping functionality. In some embodiments, encoding/decoding circuitry of the baseband circuitry 1004 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 1004 may include one or more audio digital signal processor(s) (DSP) 1004F. The audio DSP(s) 1004F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1004 and the application circuitry 1002 may be implemented together such as, for example, on a system on a chip (SOC).

In some embodiments, the baseband circuitry 1004 may provide for communication compatible with one or more radio technologies. For example, in some embodiments, the baseband circuitry 1004 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry 1004 is configured to support radio communications of more than one wireless protocol may be referred to as multi-mode baseband circuitry.

RF circuitry 1006 may enable communication with wireless networks using modulated electromagnetic radiation through a non-solid medium. In various embodiments, the RF circuitry 1006 may include switches, filters, amplifiers, etc. to facilitate the communication with the wireless network. RF circuitry 1006 may include a receive signal path which may include circuitry to down-convert RF signals received from the FEM circuitry 1008 and provide baseband signals to the baseband circuitry 1004. RF circuitry 1006 may also include a transmit signal path which may include circuitry to up-convert baseband signals provided by the baseband circuitry 1004 and provide RF output signals to the FEM circuitry 1008 for transmission.

In some embodiments, the receive signal path of the RF circuitry 1006 may include mixer circuitry 1006a, amplifier circuitry 1006b and filter circuitry 1006c. In some embodiments, the transmit signal path of the RF circuitry 1006 may include filter circuitry 1006c and mixer circuitry 1006a. RF circuitry 1006 may also include synthesizer circuitry 1006d for synthesizing a frequency for use by the mixer circuitry 1006a of the receive signal path and the transmit signal path. In some embodiments, the mixer circuitry 1006a of the receive signal path may be configured to down-convert RF signals received from the FEM circuitry 1008 based on the synthesized frequency provided by synthesizer circuitry 1006d. The amplifier circuitry 1006b may be configured to amplify the down-converted signals and the filter circuitry 1006c may be a low-pass filter (LPF) or band-pass filter (BPF) configured to remove unwanted signals from the down-converted signals to generate output baseband signals. Output baseband signals may be provided to the baseband circuitry 1004 for further processing. In some embodiments, the output baseband signals may be zero-frequency baseband signals, although this is not a requirement. In some embodiments, mixer circuitry 1006a of the receive signal path may comprise passive mixers, although the scope of the embodiments is not limited in this respect.

In some embodiments, the mixer circuitry 1006a of the transmit signal path may be configured to up-convert input baseband signals based on the synthesized frequency provided by the synthesizer circuitry 1006d to generate RF output signals for the FEM circuitry 1008. The baseband signals may be provided by the baseband circuitry 1004 and may be filtered by filter circuitry 1006c.

In some embodiments, the mixer circuitry 1006a of the receive signal path and the mixer circuitry 1006a of the transmit signal path may include two or more mixers and may be arranged for quadrature downconversion and upconversion, respectively. In some embodiments, the mixer circuitry 1006a of the receive signal path and the mixer circuitry 1006a of the transmit signal path may include two or more mixers and may be arranged for image rejection (e.g., Hartley image rejection). In some embodiments, the mixer circuitry 1006a of the receive signal path and the mixer circuitry 1006a may be arranged for direct downconversion and direct upconversion, respectively. In some embodiments, the mixer circuitry 1006a of the receive signal path and the mixer circuitry 1006a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1006 may include analog-to-digital converter (ADC) and digital-to-analog converter (DAC) circuitry and the baseband circuitry 1004 may include a digital baseband interface to communicate with the RF circuitry 1006.

In some dual-mode embodiments, a separate radio IC circuitry may be provided for processing signals for each spectrum, although the scope of the embodiments is not limited in this respect.

In some embodiments, the synthesizer circuitry 1006d may be a fractional-N synthesizer or a fractional N/N+1 synthesizer, although the scope of the embodiments is not limited in this respect as other types of frequency synthesizers may be suitable. For example, synthesizer circuitry 1006d may be a delta-sigma synthesizer, a frequency multiplier, or a synthesizer comprising a phase-locked loop with a frequency divider.

The synthesizer circuitry 1006d may be configured to synthesize an output frequency for use by the mixer circuitry 1006a of the RF circuitry 1006 based on a frequency input and a divider control input. In some embodiments, the synthesizer circuitry 1006d may be a fractional N/N+1 synthesizer.

In some embodiments, frequency input may be provided by a voltage controlled oscillator (VCO), although that is not a requirement. Divider control input may be provided by either the baseband circuitry 1004 or the applications processor 1002 depending on the desired output frequency. In some embodiments, a divider control input (e.g., N) may be determined from a look-up table based on a channel indicated by the applications processor 1002.

Synthesizer circuitry 1006d of the RF circuitry 1006 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1006d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1006 may include an IQ/polar converter.

FEM circuitry 1008 may include a receive signal path which may include circuitry configured to operate on RF signals received from one or more antennas 1010, amplify the received signals and provide the amplified versions of the received signals to the RF circuitry 1006 for further processing. FEM circuitry 1008 may also include a transmit signal path which may include circuitry configured to amplify signals for transmission provided by the RF circuitry 1006 for transmission by one or more of the one or more antennas 1010. In various embodiments, the amplification through the transmit or receive signal paths may be done solely in the RF circuitry 1006, solely in the FEM 1008, or in both the RF circuitry 1006 and the FEM 1008.

In some embodiments, the FEM circuitry 1008 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry 1006). The transmit signal path of the FEM circuitry 1008 may include a power amplifier (PA) to amplify input RF signals (e.g., provided by RF circuitry 1006), and one or more filters to generate RF signals for subsequent transmission (e.g., by one or more of the one or more antennas 1010).

In some embodiments, the PMC 1012 may manage power provided to the baseband circuitry 1004. In particular, the PMC 1012 may control power-source selection, voltage scaling, battery charging, or DC-to-DC conversion. The PMC 1012 may often be included when the device 1000 is capable of being powered by a battery, for example, when the device is included in a UE. The PMC 1012 may increase the power conversion efficiency while providing desirable implementation size and heat dissipation characteristics.

While Fig. 10 shows the PMC 1012 coupled only with the baseband circuitry 1004. However, in other embodiments, the PMC 10 12 may be additionally or alternatively coupled with, and perform similar power management operations for, other components such as, but not limited to, application circuitry 1002, RF circuitry 1006, or FEM 1008.

In some embodiments, the PMC 1012 may control, or otherwise be part of, various power saving mechanisms of the device 1000. For example, if the device 1000 is in an RRC_Connected state, where it is still connected to the RAN node as it expects to receive traffic shortly, then it may enter a state known as Discontinuous Reception Mode (DRX) after a period of inactivity. During this state, the device 1000 may power down for brief intervals of time and thus save power.

If there is no data traffic activity for an extended period of time, then the device 1000 may transition off to an RRC_Idle state, where it disconnects from the network and does not perform operations such as channel quality feedback, handover, etc. The device 1000 goes into a very low power state and it performs paging where again it periodically wakes up to listen to the network and then powers down again. The device 1000 may not receive data in this state, in order to receive data, it must transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 1002 and processors of the baseband circuitry 1004 may be used to execute elements of one or more instances of a protocol stack. For example, processors of the baseband circuitry 1004, alone or in combination, may be used execute Layer 3, Layer 2, or Layer 1 functionality, while processors of the application circuitry 1004 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below, that may for example implement some functionality disclosed in connection with Figs. 1 to 7 herein above.. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

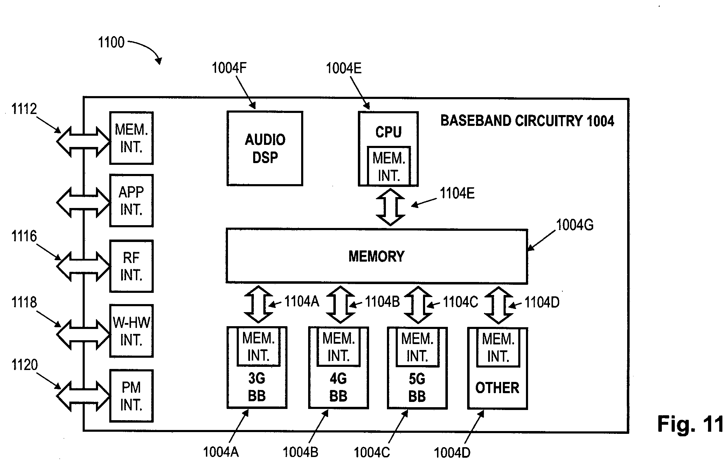

Fig. 11 illustrates example interfaces of baseband circuitry 1004 in accordance with some embodiments. As discussed above, the baseband circuitry 1004 of Fig. 10 may comprise processors 1004A-1004E and a memory 1004G utilized by said processors. Each of the processors 1004A-1004E may include a memory interface, 1104A-1104E, respectively, to send/receive data to/from the memory 1004G.

The baseband circuitry 1004 may further include one or more interfaces to communicatively couple to other circuitries/devices, such as a memory interface 1112 (e.g., an interface to send/receive data to/from memory external to the baseband circuitry 1004), an application circuitry interface 1114 (e.g., an interface to send/receive data to/from the application circuitry 1002 of Fig. 10), an RF circuitry interface 1116 (e.g., an interface to send/receive data to/from RF circuitry 1006 of Fig. 10), a wireless hardware connectivity interface 1118 (e.g., an interface to send/receive data to/from Near Field Communication (NFC) components, Bluetooth components (e.g., Bluetooth Low Energy), Wi-Fi components, and other communication components), and a power management interface 1120 (e.g., an interface to send/receive power or control signals to/from the PMC 1012.

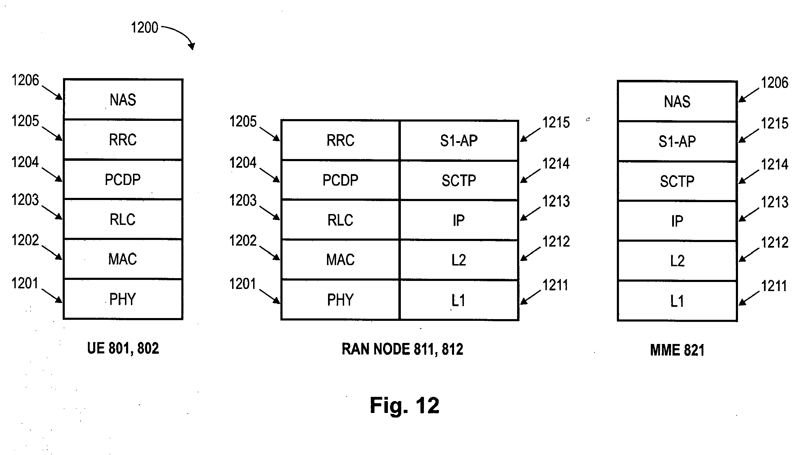

Fig. 12 is an illustration of a control plane protocol stack in accordance with some embodiments. In this embodiment, a control plane 1200 is shown as a communications protocol stack between the UE 801 (or alternatively, the UE 802), the RAN node 811 (or alternatively, the RAN node 812), and the MME 821.

The PHY layer 1201 may transmit or receive information used by the MAC layer 1202 over one or more air interfaces. The PHY layer 1201 may further perform link adaptation or adaptive modulation and coding (AMC), power control, cell search (e.g., for initial synchronization and handover purposes), and other measurements used by higher layers, such as the RRC layer 1205. The PHY layer 1201 may still further perform error detection on the transport channels, forward error correction (FEC) coding/decoding of the transport channels, modulation/demodulation of physical channels, interleaving, rate matching, mapping onto physical channels, and Multiple Input Multiple Output (MIMO) antenna processing.

The MAC layer 1202 may perform mapping between logical channels and transport channels, multiplexing of MAC service data units (SDUs) from one or more logical channels onto transport blocks (TB) to be delivered to PHY via transport channels, de-multiplexing MAC SDUs to one or more logical channels from transport blocks (TB) delivered from the PHY via transport channels, multiplexing MAC SDUs onto TBs, scheduling information reporting, error correction through hybrid automatic repeat request (HARQ), and logical channel prioritization.

The RLC layer 1203 may operate in a plurality of modes of operation, including: Transparent Mode (TM), Unacknowledged Mode (UM), and Acknowledged Mode (AM). The RLC layer 1203 may execute transfer of upper layer protocol data units (PDUs), error correction through automatic repeat request (ARQ) for AM data transfers, and concatenation, segmentation and reassembly of RLC SDUs for UM and AM data transfers. The RLC layer 1203 may also execute re-segmentation of RLC data PDUs for AM data transfers, reorder RLC data PDUs for UM and AM data transfers, detect duplicate data for UM and AM data transfers, discard RLC SDUs for UM and AM data transfers, detect protocol errors for AM data transfers, and perform RLC re-establishment.

The PDCP layer 1204 may execute header compression and decompression of IP data, maintain PDCP Sequence Numbers (SNs), perform in-sequence delivery of upper layer PDUs at re-establishment of lower layers, eliminate duplicates of lower layer SDUs at re-establishment of lower layers for radio bearers mapped on RLC AM, cipher and decipher control plane data, perform integrity protection and integrity verification of control plane data, control timer-based discard of data, and perform security operations (e.g., ciphering, deciphering, integrity protection, integrity verification, etc.).

The main services and functions of the RRC layer 1205 may include broadcast of system information (e.g., included in Master Information Blocks (MIBs) or System Information Blocks (SIBs) related to the non-access stratum (NAS)), broadcast of system information related to the access stratum (AS), paging, establishment, maintenance and release of an RRC connection between the UE and E-UTRAN (e.g., RRC connection paging, RRC connection establishment, RRC connection modification, and RRC connection release), establishment, configuration, maintenance and release of point to point Radio Bearers, security functions including key management, inter radio access technology (RAT) mobility, and measurement configuration for UE measurement reporting. Said MIBs and SIBs may comprise one or more information elements (IEs), which may each comprise individual data fields or data structures. As noted herein above, the MIB may be signaled on the PBCH, which is contained in a SSB.

The UE 801 and the RAN node 811 may utilize a Uu interface (e.g., an LTE-Uu interface) to exchange control plane data via a protocol stack comprising the PHY layer 1201, the MAC layer 1202, the RLC layer 1203, the PDCP layer 1204, and the RRC layer 1205.

The non-access stratum (NAS) protocols 1206 form the highest stratum of the control plane between the UE 801 and the MME 821. The NAS protocols 1206 support the mobility of the UE 801 and the session management procedures to establish and maintain IP connectivity between the UE 801 and the P-GW 823.

The S1 Application Protocol (S1-AP) layer 1215 may support the functions of the S1 interface and comprise Elementary Procedures (EPs). An EP is a unit of interaction between the RAN node 811 and the CN 820. The S1-AP layer services may comprise two groups: UE-associated services and non UE-associated services. These services perform functions including, but not limited to: E-UTRAN Radio Access Bearer (E-RAB) management, UE capability indication, mobility, NAS signaling transport, RAN Information Management (RIM), and configuration transfer.

The Stream Control Transmission Protocol (SCTP) layer (alternatively referred to as the SCTP/IP layer) 1214 may ensure reliable delivery of signaling messages between the RAN node 811 and the MME 821 based, in part, on the IP protocol, supported by the IP layer 1213. The L2 layer 1212 and the L1 layer 1211 may refer to communication links (e.g., wired or wireless) used by the RAN node and the MME to exchange information.

The RAN node 811 and the MME 821 may utilize an SI-MME interface to exchange control plane data via a protocol stack comprising the L1 layer 1211, the L2 layer 1212, the IP layer 1213, the SCTP layer 1214, and the S1-AP layer 1215.

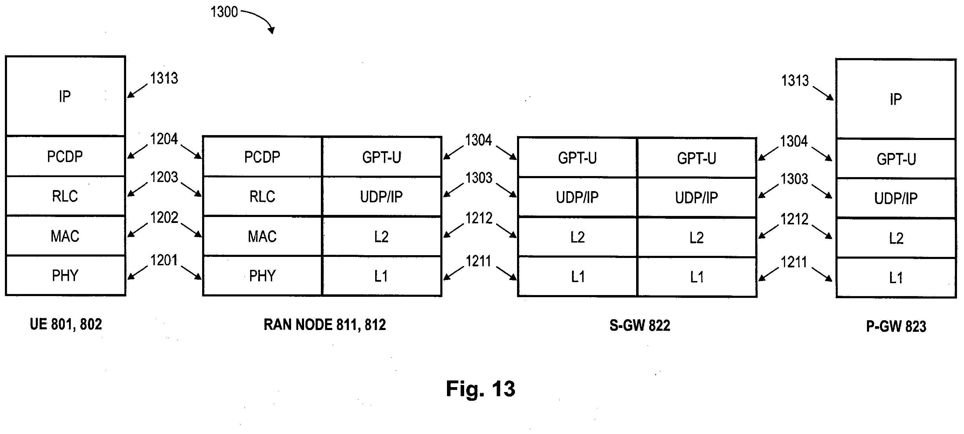

Fig. 13 is an illustration of a user plane protocol stack in accordance with some embodiments. In this embodiment, a user plane 1300 is shown as a communications protocol stack between the UE 801 (or alternatively, the UE 802), the RAN node 811 (or alternatively, the RAN node 812), the S-GW 822, and the P-GW 823. The user plane 1300 may utilize at least some of the same protocol layers as the control plane 1200. For example, the UE 801 and the RAN node 811 may utilize a Uu interface (e.g., an LTE-Uu interface) to exchange user plane data via a protocol stack comprising the PHY layer 1201, the MAC layer 1202, the RLC layer 1203, the PDCP layer 1204.

The General Packet Radio Service (GPRS) Tunneling Protocol for the user plane (GTP-U) layer 1304 may be used for carrying user data within the GPRS core network and between the radio access network and the core network. The user data transported can be packets in any of IPv4, IPv6, or PPP formats, for example. The UDP and IP security (UDP/IP) layer 1303 may provide checksums for data integrity, port numbers for addressing different functions at the source and destination, and encryption and authentication on the selected data flows. The RAN node 811 and the S-GW 822 may utilize an S1-U interface to exchange user plane data via a protocol stack comprising the L1 layer 1211, the L2 layer 1212, the UDP/IP layer 1303, and the GTP-U layer 1304. The S-GW 822 and the P-GW 823 may utilize an S5/S8a interface to exchange user plane data via a protocol stack comprising the L1 layer 1211, the L2 layer 1212, the UDP/IP layer 1303, and the GTP-U layer 1304. As discussed above with respect to Fig. 12, NAS protocols support the mobility of the UE 801 and the session management procedures to establish and maintain IP connectivity between the UE 801 and the P-GW 823.

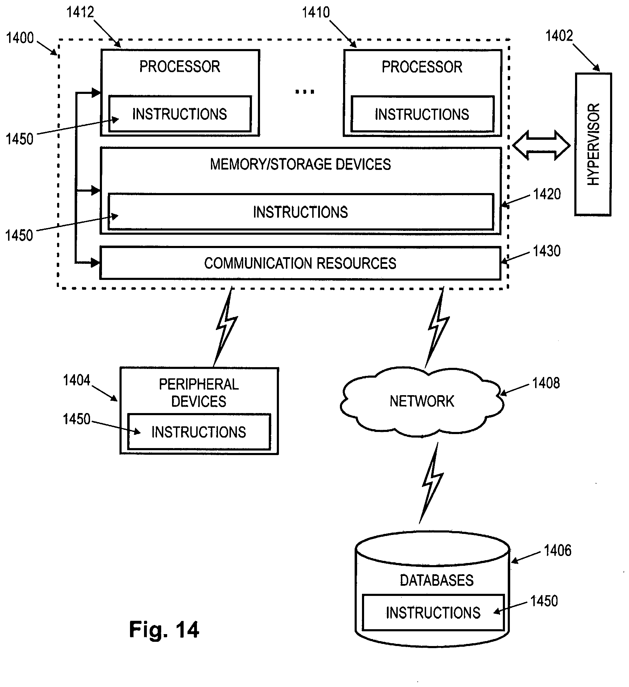

Fig. 14 is a block diagram illustrating components, according to some example embodiments, able to read instructions from a machine-readable or computer-readable medium (e.g., a non-transitory machine-readable storage medium) and perform any one or more of the methodologies discussed herein. Specifically, Fig. 14 shows a diagrammatic representation of hardware resources 1400 including one or more processors (or processor cores) 1410, one or more memory/storage devices 1420, and one or more communication resources 1430, each of which may be communicatively coupled via a bus 1440. For embodiments where node virtualization (e.g., NFV) is utilized, a hypervisor 1402 may be executed to provide an execution environment for one or more network slices/sub-slices to utilize the hardware resources 1400.

The processors 1410 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 1412 and a processor 1414.

The memory/storage devices 1420 may include main memory, disk storage, or any suitable combination thereof. The memory/storage devices 1420 may include, but are not limited to any type of volatile or non-volatile memory such as dynamic random access memory (DRAM), static random-access memory (SRAM), erasable programmable read-only memory (EPROM), electrically erasable programmable read-only memory (EEPROM), Flash memory, solid-state storage, etc.

The communication resources 1430 may include interconnection or network interface components or other suitable devices to communicate with one or more peripheral devices 1404 or one or more databases 1406 via a network 1408. For example, the communication resources 1430 may include wired communication components (e.g., for coupling via a Universal Serial Bus (USB)), cellular communication components, NFC components, Bluetooth components (e.g., Bluetooth Low Energy), Wi-Fi components, and other communication components.

Instructions 1450 may comprise software, a program, an application, an applet, an app, or other executable code for causing at least any of the processors 1410 to perform any one or more of the methodologies discussed herein. The instructions 1450 may reside, completely or partially, within at least one of the processors 1410 (e.g., within the processor's cache memory), the memory/storage devices 1420, or any suitable combination thereof. Furthermore, any portion of the instructions 1450 may be transferred to the hardware resources 1400 from any combination of the peripheral devices 1404 or the databases 1406. Accordingly, the memory of processors 1410, the memory/storage devices 1420, the peripheral devices 1404, and the databases 1406 are examples of computer-readable and machine-readable media.

In embodiments, the device of Figs. 10 and 14, and particularly the baseband circuitry of Fig. 11, may be to perform one or more of the processes techniques or methods as described herein, or portions thereof.

In some embodiments, the electronic device(s), network(s), system(s), chip(s) or component(s), or portions or implementations thereof, of Figs. 10 and 14, or some other figure herein may be configured to perform one or more processes, techniques, or methods as described herein, or portions thereof.

The foregoing description of one or more implementations provides illustration and description, but is not intended to be exhaustive or to limit the scope of embodiments to the precise form disclosed. Modifications and variations within the scope of the appended claims are possible in light of the above teachings or may be acquired from practice of various embodiments.

## Claims

1. A method for wireless communication in a fifth generation, 5G, or new radio, NR, system, the method comprising:
reporting, by a user equipment, UE (302, 801, 802), a UE capability on the support of simultaneous multiple reception, Rx, beams; and
monitoring, by the UE (302, 801, 802), a physical downlink control channel, PDCCH, with both a common search space, CSS, and a UE specific search space, USS, at a monitoring occasion configured by a NR evolved NodeB, gNB (301), using same or different Rx beams,
wherein, given that the gNB (301) uses different transmission, Tx, beams for the transmission of PDCCH with CSS and USS, different Rx beams need to be monitored at the UE for receiving the CSS and USS of the PDCCH;
wherein if the UE (302, 801, 802) can monitor only one Rx beam during the monitoring occasion, the UE (302, 801, 802) prioritizes the monitoring of either USS or CSS;
wherein if the CSS comprises a common downlink control indicator, DCI, that carries pre-emption indication, PI,
wherein the common DCI refers to a group DCI for group communication, the UE (302, 801, 802) is configured to prioritize monitoring of the CSS comprising the common DCI with PI over monitoring the USS carrying UE-specific DCI, else the UE (302, 801, 802) is configured to prioritize monitoring of the USS carrying UE-specific DCI over monitoring the CSS.

2. The method of claim 1, wherein when the UE (302, 801, 802) is configured to monitor for group-common PDCCH with slot format indicator, SFI, the UE (302, 801, 802) is configured with a control resource set, CORESET, with at least one PDCCH candidate for the group-common PDCCH and quasi-co-located, QCL-ed, to a synchronization block, SS block.

3. The method of one of claims 1 to 2, wherein in case when UE (302, 801, 802) only supports a single RX beam, the UE (302, 801, 802) is configured by higher layer signaling to use which Rx beams for the monitoring of PDCCH with CSS and USS.

4. The method according to claim 3, wherein the Rx beams carrying the CSS and USS, respectively, are time multiplexed.

5. The method of one of claims 1 to 4, wherein in addition to being configured with a default monitoring periodicity for a CORESET, the UE (302, 801, 802) is configured, using UE-specific radio resource control, RRC, signaling, with a monitoring periodicity for a certain set of PDCCH candidates for one or more DCI formats with the same or different DCI payload sizes.

6. The method of one of claims 1 to 5, wherein in addition to a beam pair link, BPL, that includes at least QCL and possibly associated receiver beamforming assumption, and being associated with a CORESET, the UE (302, 801, 802) is configured via UE-specific RRC signaling to monitor a certain set of PDCCH candidates for a set of one or more aggregation levels, ALs, for a given DCI format or DCI format size.

7. The method of one of claims 1 to 6, wherein whether the PDCCH of CSS and USS are QCL-ed with at least one of parameters is pre-defined or configured by higher layer signaling, said parameters including average gain, delay spread, Doppler spread, Doppler shift, and average delay parameters, spatial Rx parameters.

8. An apparatus for use in UE (302, 801, 802), the apparatus comprising means to perform the method according to one of claims 1 to 7.

9. One or more non-transitory computer-readable media comprising instructions to cause an electronic device, upon execution of the instructions by one or more processors of the electronic device, to perform the method according to one of claims 1 to 7.

## Patentansprüche

1. Verfahren zur drahtlosen Kommunikation in einem System der fünften Generation, 5G, oder eines neuen Funk-, NR, Systems, wobei das Verfahren umfasst:
Berichten, durch ein Benutzergerät, UE (302, 801, 802), einer UE-Fähigkeit über die Unterstützung von gleichzeitigem Mehrfachempfang, Rx, Strahlen; und
Überwachen, durch das UE (302, 801, 802), eines physikalischen Downlink-Kontrollkanals, PDCCH, mit sowohl einem gemeinsamen Suchraum, CSS, als auch einem UE-spezifischen Suchraum, USS, bei einer Überwachungsgelegenheit, die durch einen NR evolved NodeB, gNB (301), konfiguriert ist unter Verwendung desselben oder verschiedener Rx-Strahlen, wobei im Hinblick darauf, dass der gNB (301) verschiedene Übertragungs- , Tx, Strahlen für die Übertragung von PDCCH mit CSS und USS verwendet, verschiedene Rx-Strahlen an dem UE überwacht werden müssen, um den CSS und USS des PDCCH zu empfangen;
wobei, wenn das UE (302, 801, 802) nur einen Rx-Strahl während der Überwachungsgelegenheit überwachen kann, das UE (302, 801, 802) die Überwachung von entweder USS oder CSS priorisiert;
wobei, wenn der CSS einen gemeinsamen Downlink-Kontrollindikator, DCI, umfasst, der eine Preemption Indication, PI, trägt, wobei sich der gemeinsame DCI auf einen Gruppen-DCI für Gruppenkommunikation bezieht, das UE (302, 801, 802) so konfiguriert ist, dass es die Überwachung des CSS, der den gemeinsamen DCI mit PI umfasst, gegenüber der Überwachung des USS, der einen UE-spezifischen DCI trägt, priorisiert, andernfalls ist das UE (302, 801, 802) so konfiguriert, dass es die Überwachung des USS, der einen UE-spezifischen DCI trägt, gegenüber der Überwachung des CSS priorisiert.

2. Verfahren nach Anspruch 1, wobei, wenn das UE (302, 801, 802) so konfiguriert ist, dass es auf gruppengemeinsame PDCCH mit Slot-Format-Indikator, SFI, überwacht, das UE (302, 801, 802) mit einem Kontrollressourcensatz, CORESET, mit mindestens einem PDCCH-Kandidaten für die gruppengemeinsame PDCCH konfiguriert ist und quasi-co-located, QCL-ed, zu einem Synchronisationsblock, SS-Block.

3. Verfahren nach einem der Ansprüche 1 bis 2, wobei für den Fall, dass das UE (302, 801, 802) nur einen einzigen RX-Strahl unterstützt, das UE (302, 801, 802) durch Signalisierung höherer Schichten konfiguriert wird, welche Rx-Strahlen für die Überwachung von PDCCH mit CSS und USS zu verwenden.

4. Verfahren nach Anspruch 3, wobei die Rx-Strahlen, die den CSS bzw. USS tragen, zeitmultiplext werden.

5. Verfahren nach einem der Ansprüche 1 bis 4, wobei das UE (302, 801, 802) zusätzlich dazu, dass es mit einer Standard-Überwachungsperiodizität für ein CORESET konfiguriert ist, unter Verwendung einer UE-spezifischen Radio Resource Control, RRC, Signalisierung, mit einer Überwachungsperiodizität für einen bestimmten Satz von PDCCH-Kandidaten für ein oder mehrere DCI-Formate mit den gleichen oder unterschiedlichen DCI-Nutzlastgrößen konfiguriert wird.

6. Verfahren nach einem der Ansprüche 1 bis 5, wobei zusätzlich zu einer Strahlenpaarverbindung, BPL, die mindestens QCL und möglicherweise verknüpfte Empfängerstrahlformungsannahmen enthält und mit einem CORESET verknüpft ist, das UE (302, 801, 802) über UE-spezifische RRC-Signalisierung konfiguriert ist, um einen bestimmten Satz von PDCCH-Kandidaten für einen Satz von einer oder mehreren Aggregationsstufen, ALs, für ein gegebenes DCI-Format oder DCI-Formatgröße zu überwachen.

7. Verfahren nach einem der Ansprüche 1 bis 6, wobei ob der PDCCH von CSS und USS mit mindestens einem der Parameter QCL-ed sind vordefiniert oder durch Signalisierung höherer Schichten konfiguriert ist, wobei die Parameter durchschnittliche Verstärkung, Verzögerungsspreizung, Dopplerspreizung, Dopplerverschiebung und durchschnittliche Verzögerungsparameter, räumliche Rx-Parameter beinhalten.

8. Vorrichtung zur Verwendung in UE (302, 801, 802), wobei die Vorrichtung Mittel zum Durchführen des Verfahrens nach einem der Ansprüche 1 bis 7 umfasst.

9. Ein oder mehrere nicht-transitorische computerlesbare Medien, die Anweisungen enthalten, um eine elektronische Vorrichtung zu veranlassen, bei Ausführen der Anweisungen durch einen oder mehrere Prozessoren der elektronischen Vorrichtung, das Verfahren nach einem der Ansprüche 1 bis 7 durchzuführen.

## Revendications

1. Un procédé de communication sans fil dans un système de cinquième génération, 5G, ou de nouvelle radio, NR, le procédé comprenant :
la notification, par un équipement utilisateur, UE (302, 801, 802), d'une capacité de l'UE à prendre en charge des faisceaux de réception, Rx, multiples simultanés ; et
la surveillance, par l'UE (302, 801, 802), d'un canal physique de contrôle de liaison descendante, PDCCH, avec à la fois un espace de recherche commun, CSS, et un espace de recherche spécifique à l'UE, USS, au niveau d'une occasion de surveillance configurée par un nœud B évolué NR, gNB (301), utilisant des faisceaux Rx identiques ou différents,
dans lequel, compte tenu du fait que le gNB (301) utilise des faisceaux de transmission, Tx, différents pour la transmission de PDCCH avec CSS et USS, des faisceaux Rx différents doivent être surveillés au niveau de l'UE pour recevoir le CSS et l'USS du PDCCH ;
dans lequel, si l'UE (302, 801, 802) ne peut surveiller qu'un faisceau Rx durant l'occasion de surveillance, l'UE (302, 801, 802) priorise la surveillance soit de l'USS soit du CSS ;
dans lequel, si le CSS comprend un indicateur de contrôle de liaison descendante, DCI, commun qui achemine une indication de préemption, PI,
dans lequel le DCI commun se réfère à un groupe de DCI pour une communication de groupe, l'UE (302, 801, 802) est configuré pour prioriser la surveillance du CSS comprenant le DCI avec PI commune par rapport à la surveillance de l'USS portant un DCI spécifique à l'UE, sinon l'UE (302, 801, 802) est configuré pour prioriser la surveillance de l'USS portant un DCI spécifique à l'UE par rapport à la surveillance du CSS.

2. Le procédé selon la revendication 1, dans lequel, quand l'UE (302, 801, 802) est configuré pour surveiller un PDCCH commun de groupe avec indicateur de format de slot, SFI, l'UE (302, 801, 802) est configuré avec un ensemble de ressources de contrôle, CORESET, avec au moins un PDCCH candidat pour le PDCCH commun de groupe et quasi-colocalisé, QCL, avec un bloc de synchronisation, bloc SS.

3. Le procédé selon l'une des revendications 1 à 2, dans lequel, dans le cas où l'UE (302, 801, 802) prend en charge seulement un unique faisceau RX, l'UE (302, 801, 802) est configuré par signalisation de couche supérieure pour quels faisceaux Rx utiliser pour la surveillance de PDCCH avec CSS et USS.

4. Le procédé selon la revendication 3, dans lequel les faisceaux Rx acheminant respectivement le CSS et l'USS sont multiplexés temporellement.

5. Le procédé selon l'une des revendications 1 à 4, dans lequel, outre sa configuration avec une périodicité de surveillance par défaut pour un CORESET, l'UE (302, 801, 802) est configuré, en utilisant une signalisation de contrôle de ressource radio, RRC, spécifique à l'UE, avec une périodicité de surveillance pour un certain ensemble de PDCCH candidats pour un ou plusieurs formats de DCI avec des tailles de charge utile de DCI identiques ou différentes.

6. Le procédé selon l'une des revendications 1 à 5, dans lequel, en plus d'une liaison de paire de faisceaux, BPL, qui inclut une hypothèse de formation de faisceau de récepteur au moins quasi-colocalisé et éventuellement associé, et étant associée à un CORESET, l'UE (302, 801, 802) est configuré via une signalisation RRC spécifique à l'UE pour surveiller un certain ensemble de PDCCH candidats pour un ensemble d'un ou plusieurs niveaux d'agrégation, AL, pour un format de DCI donné ou une taille de format de DCI donnée.

7. Le procédé selon l'une des revendications 1 à 6, dans lequel le point de savoir si les PDCCH de CSS et USS sont ou non quasi-colocalisés avec au moins l'un d'entre des paramètres, est prédéfini ou configuré par une signalisation de couche supérieure, lesdits paramètres incluant un gain moyen, une dispersion de retards, une dispersion Doppler, un décalage Doppler et des paramètres de retard moyen, des paramètres Rx spatiaux.

8. Un appareil destiné à être utilisé dans un UE (302, 801, 802), l'appareil comprenant des moyens pour mettre en œuvre le procédé selon l'une des revendications 1 à 7.

9. Un ou plusieurs supports lisibles par ordinateur comprenant des instructions pour amener un dispositif électronique, lors de l'exécution des instructions par un ou plusieurs processeurs du dispositif électronique, à mettre en œuvre le procédé selon l'une des revendications 1 à 7.
